# EUROPÄISCHE PATENTANMELDUNG

(11) **EP 2 674 353 A1**
(43) Veröffentlichungstag der Anmeldung: **18.12.2013**
(21) Anmeldenummer: 13171850.4
(22) Anmeldetag: 13.06.2013
(51) Int. Cl.: B62M 3/08

(54) **Axial bewegliches Pedal**

(30) Priorität: 13.06.2012 DE 102012105104
(71) Anmelder: BioConform GmbH, 07749 Jena (DE)
(72) Erfinder: Töpfer, Jörg, 07749 Jena (DE)
(74) Vertreter: Zech-Agarwal, Nicole Claudia

(57) **Zusammenfassung**

Die Erfindung betrifft ein Pedal mit einer ersten Drehachse 13, einer Basis 21 und einer Fussauflage 31 oder Handauflage. Die Basis 21 und die Fussauflage 31 oder Handauflage sind um die erste Drehachse 13 drehbar und entlang der ersten Drehachse 13 verschiebbar ausgebildet, wobei es sich bei der Verschiebung um eine freie, geradlinige Bewegung handelt.

## Beschreibung

### Technisches Gebiet

Die Erfindung betrifft ein Pedal mit einer beweglichen Fussauflage für Fahrräder, sowie für Sport- und Therapiegeräte mit analogen Bewegungsmustem.

### Stand der Technik

Ein naturgemäßes, freies Zusammenspiel aller bei zyklischen Tretbewegungen (ähnlich dem Fahrradfahren) beteiligten Bewegungen in den Beingelenken, das gleichzeitig um mehrere bewegliche Achsen und somit in mindestens 3 Ebenen kombiniert erfolgen kann, ist aus dem Stand der Technik nicht bekannt.

In der chirurgischen wie auch in der orthopädischen konservativen Therapie, der postoperativen Rehabilitation und Prävention, vor allem aber zum medizinischen Einsatz bei neuromuskulären Erkrankungen im klinischen und ambulanten Bereich, werden im Zuge neuer wissenschaftlicher Erkenntnisse zunehmend möglichst einfache Geräte nachgefragt, die aber gleichzeitig die multiaxialen Bewegungsmuster der unteren Extremitäten sowohl einzeln als auch im komplexen Zusammenspiel ausführbar machen.

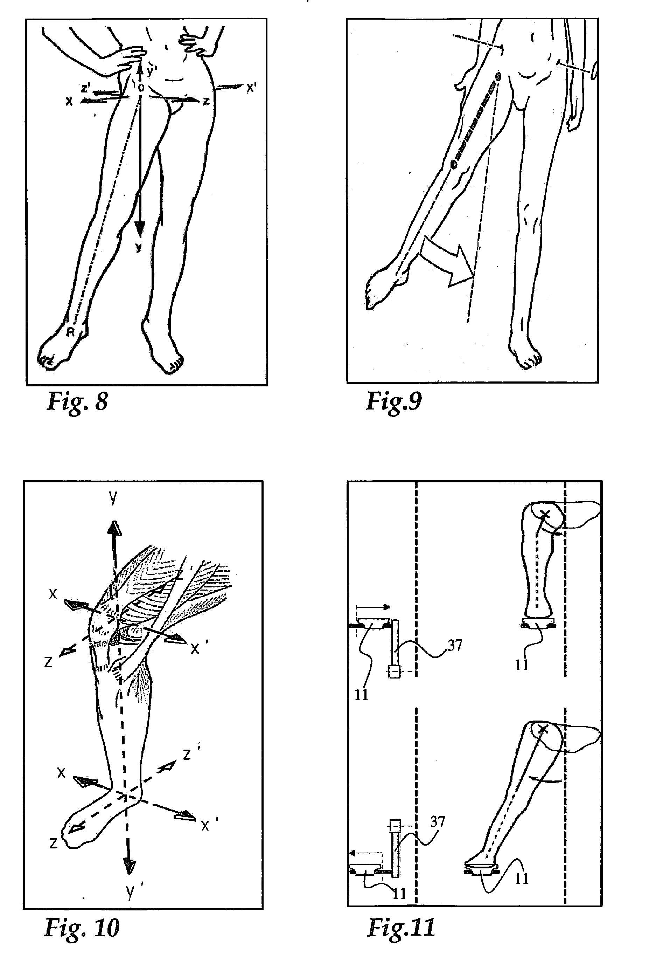

Bisherige Pedalkonstruktionen erlauben zwar gekoppelte, bzw. kombinierte Bewegungen der Gelenke in Hüfte, Knie und Fuß im aktiv ungeführten oder passiv geführten Modus. Es sind jedoch keine Pedalkonstruktionen bekannt, die alle der folgenden Bewegungen allein und /oder in Kombination ermöglichen. (zu deren besseren Illustration wird Bezug auf die Fig.8 bis 10 genommen):
a) Beuge-Streck-Bewegungen des Beines bzw. aller beteiligten Beingelenke (Flexion/Extension), d.h. eine Bewegung um eine frontale Achse xx' bzw. eine Bewegung in einer Sagittalebene (siehe Fig. 8/10).
b) An- und Abspreizen des Beines bzw. aller beteiligten Beingelenke (Adduktion / Abduktion), d.h. eine Bewegung um eine sagittale Achse zz' bzw. eine Bewegung in einer Frontalebene (siehe Fig.9).
c) Einwärts-Auswärts-Drehbewegungen des Beines bzw. aller beteiligten Beingelenke (Innen- / Aussenrotation), d.h. eine Bewegung um eine vertikale Achse yy' bzw. eine Bewegung in einer Transversalebene (siehe Fig. 8/10).

Es sind z.B. eine Bewegungskopplung, bzw. Kombination der Bewegungen a) und c) beschrieben worden (vgl. weiter unten), der biomechanisch nötige Bewegungsfreiraum des Beines bzw. der Beinachse, der zusätzlich die freie Bewegung b) insbesondere auch auf einer Geraden zulässt, wird aber bei solchen Pedalen nicht eingeräumt. Dieser unvollständig freie Bewegungsraum hat erhebliche Nutzer-Nachteile. Zudem erlauben frei bewegliche, d.h. nicht-zwangsgeführte Pedale nach dem Stand der Technik keine die Bewegungsausführung stabilisierende Dämpfung durch konstruktive oder auf Eigenschaften von Bauteilen basierende Lösungen (wie beispielsweise eine nicht-tripologische Dämpfung). Insbesondere ist keine variable, bedarfsgerechte bzw. anwenderspezifische Dämpfung, basierend auf konstruktiven und / oder materialtechnologischen Eigenschaften der verwendeten Bauteile möglich.

Aus der DE 3 218 290 ist ein Pedaltrainingsgerät bekannt, welches zusätzlich zur Drehbewegung der Pedale eine Pedalbewegung um eine weitere Achse erlaubt, die senkrecht zur Pedalachse des am Ende eines Kurbelarmes sitzenden Pedals verläuft. Dadurch wird eine freie Schwenkbewegung des Fußes in einem Winkel zur Längserstreckung der Pedale ermöglicht. Das Pedaltrainingsgerät ist in seiner Konstruktion einfach gehalten, ein Drehpunkt des Pedals unterhalb des Fussballens eines Benutzers und die daraus resultierende Drehbewegung des Vorderfußes um eine Kugel, bei der die Ferse hin und her schwingt während der Fussballen in konstantem Abstand zum Tretkurbelarm verbleibt, wie er beim genannten Trainingsgerät vorgesehen ist, muss aus biomechanischer Sicht allerdings als belastend für das Kniegelenk und die Sprunggelenke betrachtet werden. Ein ähnliches Konzept (in modernerer Ausführung) wird auch in der WO 2007/009258 A1 gelehrt. Eine um die Pedalachse rotierbare Basis trägt dort ein Kugelgelenk und darauf eine Fussauflage. Dadurch wird eine Dreh- bzw. Schwenkbewegung des Fusses ermöglicht. Auch das in der FR 2661651 beschriebene Pedal lässt eine geringfügige Drehung und zusätzlich eine Verkippung in der Ebene der Fussauflage zu, wobei dies durch ein spezielles Kugellager bewerkstelligt wird. Allerdings führen auch die Anordnungen der Dreh- bzw. Kugellager im Fussballenbereich bei WO 2007/009258 A1 und FR 2661651 zu einem - biomechanisch nachteiligen - Schwingen der Ferse.

Die EP 1 761 428 offenbart eine funktionelle Tretmechanik, bei welcher die Schuhauflage auf einem Support derart beweglich angeordnet ist, dass eine Schwenkbewegung in einem Winkel zur Längsachse der Schuhauftrittsfläche bzw. zur Fahrtrichtung ermöglicht ist. Biomechanisch vorteilhafter als beim Pedaltrainingsgerät aus der DE 3 218 290 schwingt hierbei der Vorfuss um einen Drehpunkt in der Ferse. Gemäss einer Ausführungsvariante ist ein Kegelstumpf mit einer kurvenförmigen Nut in seiner Manteloberfläche an der Pedalachse drehfest angeordnet. In diese Nut greift ein Bolzen ein, welcher starr mit der Schuhauftrittsfläche verbunden ist. Diese Konstruktion sorgt dafür, dass die Schuhauftrittsfläche des Pedals in der von Ihr aufgespannten Ebene eine zwangsgeführte Schwenkbewegung und zusätzlich eine zwangsgeführte Kippbewegung aus der Ebene der Schwenkbewegung heraus vollführt. Die Schuhauflage erstreckt sich über die ganze Länge des Fusses. Im Fersenbereich der Schuhauftrittsfläche befindet sich ein Drehpunkt, der den Ballenbereich der Schuhauftrittsftäche in seiner Schwenkbewegung führt. Die erwähnte Tretmechanik ist recht sperrig und aufwändig in der Konstruktion. Auch treten im Betrieb relativ hohe Reibe- und Gleitverluste auf. Bei der beschriebenen Ausführungsvariante ist es zudem nicht möglich, die Schuhauftrittsfläche auf den Fussballenbereich zu beschränken.

Analog zur beschriebenen Tretmechanik aus der EP 1 761 428 werden in der WO 2008/086405 A2 und der WO 96/00679 Pedale offenbart, bei denen die Pedalachse mit einer Nut versehen ist, in welche ein Bolzen eingreift. Der Bolzen ist Teil einer Fussauflage, welche durch das beschriebene Zusammenwirken von Nut und Bolzen in zwangsgeführter Bewegung entlang der Pedalachse hin und her bewegt wird. Das erzielte - 2 dimensional isolierte - Bewegungsmuster ist jedoch einschränkend und unnatürlich und damit belastend für die Beine, da keine Schwenkbewegung bzw. kein Einwärts- und Auswärtsdrehen des Fusses möglich ist.

Das in der DE 10 2009 024 749 A1 offenbarte Pedal ruht in der Art eines Schlittens auf zwei konzentrischen, kreisbogenabschnittförmigen Lagern. Auch dieses Pedal stellt eine recht aufwändige Konstruktion dar, die sich nur schwerlich gewichtssparend verwirklichen lässt. Ausserdem begünstigt die Konstruktion eine Verschmutzung.

Biomechanisch nachteilig an allen bisher aufgeführten Lösungen ist, wie oben beschrieben, dass freie Bewegungen des Beines respektive des Fußes in der Frontalebene in Kombination mit Bewegungen in der Sagittal- sowie der Transversalebene nicht möglich sind. Gemäss Stand der Technik ist insbesondere in Kombination mit den anderen beschriebenen Bewegungen keine Abduktion und Adduktion sowohl des Oberschenkels bzw. des Ober- und Unterschenkels relativ zum Becken, als auch des Unterschenkels relativ zum Oberschenkel ermöglicht. Gerade aber die im Zuge von Beugung bzw. Streckung des Beines von der menschlichen Biomechanik geforderte Kinematik einer O - bzw. X - Bein-Bildung (Varisierung / Valgisierung des Knies) ist für die Gelenkgesundheit immens wichtig.

### Aufgabe der Erfindung

Eine Aufgabe der vorliegenden Erfindung besteht darin, ein Pedal bereitzustellen, welches ein oder mehrere der eingangs erwähnten Nachteile nicht aufweist. Insbesondere ist es ein Ziel, ein Pedal vorzuschlagen, welches ein freies Zusammenspiel aller beim Fahrradfahren beteiligten Bewegungen in den Beingelenken in mindestens 3 Ebenen zulässt und in der Folge biomechanisch effizienter als bekannte Lösungen ist.

Zudem wird angestrebt, das Pedal konstruktiv einfacher und damit preiswerter zu gestalten. Die Einfachheit soll darüber hinaus ein geringes Gewicht, die Variabilität der Ausführung und die Servicefreundlichkeit des Pedals begünstigen.

Eine ebenfalls beschriebene bevorzugte Ausgestaltungsform des erfindungsgemässen Pedals soll es erlauben, bei freier, d.h. nicht-zwangsgeführter Beweglichkeit eine die Bewegungsausführung stabilisierende Dämpfung zu gewährleisten, vorzugsweise durch variable, an die Bedürfnisse des Anwenders angepasste bzw. bedarfsgerechte Dämpfungselemente, die einfach austauschbar und zweckmässigerweise durch Distanzelemente verstellbar sind.

Weitere Vorteile und Ziele der vorliegenden Erfindung ergeben sich aus der nachfolgenden Beschreibung.

### Darstellung der Erfindung

Die oben genannte Aufgabe wird erfindungsgemäss gelöst durch ein Pedal nach Anspruch 1.

Insbesondere handelt es sich dabei um ein Pedal mit einer ersten Drehachse (vorzugsweise definiert durch die übliche physische Pedalachse), einer Basis und einer Fussauflage oder einer Handauflage bzw. einem Handgriff. Die Basis ist entlang der ersten Drehachse verschiebbar bzw. bewegbar.

Es ist bevorzugt, wenn die Fussauflage um eine zweite Drehachse drehbar mit der Basis verbunden ist. Die zweite Drehachse ist dabei mit Vorteil quer zur ersten Drehachse angeordnet. Ausserdem ist die zweite Drehachse zweckmässigerweise zusammen mit der Basis entlang der ersten Drehachse verschiebbar bzw. bewegbar.

Der Fuss schafft jedoch bei der Bedienung des Pedals (erleichtert durch die freie Hin-und Her-Beweglichkeit der Basis bzw. des Fußes entlang der ersten Drehachse) automatisch durch ein leichtes Verkippen des inneren und/oder äußeren Fußrandes, das von einer Rotation zwischen Unterschenkel und Oberschenkel begleitet wird, selbst eine (wenn auch eingeschränkte) Beweglichkeit analog zu derjenigen, die durch die oben erwähnte zweite Drehachse gewährleistet wird. Diese Beweglichkeit entspricht dem Bewegungsbedarf der Supination (Aufkanten des inneren Fußrandes - insbesondere beim Beugen des Beines), sowie der Pronation (Aufkanten des äußeren Fußrandes - insbesondere beim Strecken des Beines) bei komplexen zyklischen Tretbewegungen wie z.B. beim Fahrradfahren. Dies wurde bei Versuchen im Rahmen einer (noch unveröffentlichten) medizinischen Studie mit einer Pedalvariante ohne zweite Drehachse bestätigt.

Deshalb ist auch allgemein ein Pedal Gegenstand der vorliegenden Erfindung, mit einer ersten Drehachse, einer Basis, und einer Fussauflage oder einer Handauflage oder einem Handgriff, wobei die Basis um die erste Drehachse drehbar und entlang der ersten Drehachse verschiebbar ist.

Bei der Verschiebung handelt es sich vorzugsweise um eine freie und mit Vorteil geradlinige Bewegung. Letzteres auch deshalb, weil dies eine Vereinfachung der Bauweise bewirkt und den Einsatz besonders leichter Materialien erlaubt.

Eine weitere Verbesserung der Funktionalität kann dadurch erreicht werden, dass die Verschiebung gefedert und/oder gedämpft ist. Zusätzlich kann eine Verbesserung der bedarfsgerechten Variabilität durch leichte Austauschbarkeit der Dämpfer und durch den möglichen Einsatz von Distanzstellern erreicht werden.

Nachfolgend werden Ausgestaltungsformen des erfindungsgemässen Pedals beschrieben, wobei die genannten bevorzugten Merkmale separat (als Teil eines beliebigen Pedals) oder - soweit sie sich nicht ausschliessen - in beliebiger Kombination verwirklicht sein können. Viele der in diesem Dokument beschriebenen Merkmale sind unabhängig von der Art des Pedals vorteilhaft und müssen nicht notwendigerweise mit den in Anspruch 1 aufgeführten Merkmalen oder anderen hier beschriebenen Merkmalen kombiniert sein (auch wenn eine solche Kombination Vorteile mit sich bringen kann), sondern sie können Teil eines beliebigen Pedals sein.

Begriffe in diesem Dokument sollen bevorzugt so verstanden werden, wie sie ein Fachmann auf dem Gebiet verstehen würde. Es sei auf die massgeblichen Definitionen gemäß medizinischer Nomenklatur verwiesen. Insbesondere für den Fall, dass Unklarheiten bestehen sollten, können die in diesem Dokument aufgeführten bevorzugten Definitionen (alternativ oder ergänzend) herangezogen werden.

Bevorzugt beziehen sich Angaben in diesem Dokument - soweit nichts anderes angegeben ist - auf das Pedal wie es im Normalbetrieb vorläge, d.h. während ein Fuss auf der Fussauflage ruht und/oder das Pedal durch die Beine bzw. Füsse eines Benutzers bewegt wird.

Wie oben erwähnt, ist ein Pedal mit einer ersten Drehachse, einer Fussauflage und einer um die erste Drehachse drehbaren und entlang der ersten Drehachse verschiebbaren Basis und/oder Fussauflage dann besonders vorteilhaft, wenn es sich bei der Verschiebung um eine freie Bewegung handelt. Von besonderem Interesse ist hierbei eine geradlinige Verschiebung, insbesondere eine Parallelverschiebung der Basis und/oder der Fussauflage, vorzugsweise entlang oder parallel zur ersten Drehachse bzw. zur Pedalachse. Ein solches Pedal ist preiswert mit minimalem Gewicht herstellbar sowie besonders servicefreundlich.

Damit die weiter oben genannte automatische Verkippbarkeit des Fusses begleitet von der Rotation des Unterschenkels relativ zum Oberschenkel (Supination bzw. Pronation in Assoziation mit tibio-femoraler Rotation) nicht behindert wird, ist es (zumindest wenn die Fussauflage nicht um eine zweite und/oder dritte Drehachse drehbar mit der Basis verbunden ist) bevorzugt, wenn das Pedal keine Vorrichtung zum Verbinden (insbesondere keine formschlüssige Verbindung wie eine Clickverbindung oder eine Rastverbindung) eines Schuhs mit der Fussauflage aufweist.

Wie erwähnt, kann die Fussauflage zusätzlich zur Bewegung entlang der ersten Drehachse um eine zweite Drehachse drehbar mit der Basis oder mit der ersten Drehachse verbunden sein. Die zweite Drehachse ist dabei mit Vorteil quer zur ersten Drehachse angeordnet. Ausserdem ist die zweite Drehachse zweckmässigerweise zusammen mit der Basis entlang der ersten Drehachse verschiebbar bzw. bewegbar.

Mit Vorteil ist die Oberseite der Fussauflage (gegenüber einer horizontalen Ausrichtung) zum inneren Ende der Pedalachse (d.h. dem Tretkurbelarm bzw. dem zweiten Pedal zugewandten Ende) hin geneigt, vorzugsweise um mindestens 1, 2 oder 3 Grad und/oder höchstens 15,10 oder 5 Grad. Dadurch kann beim Strecken des Beines mehr Kraft appliziert werden und das Abrutschen vom Pedal wird erschwert.

Eine weitere bevorzugte Ausführungsform verbessert die Griffigkeit bzw. Rutschfestigkeit und den Krafteintrag durch den Anwender und zeichnet sich durch eine konkave Fussauflage aus, wobei vorzugsweise die mit dem Fuss oder dem Schuh in Kontakt tretende Fläche, insbesondere die Auftrittsfläche konkav ausgebildet ist.

Die Fussauflage kann mit Vorteil von innen (d.h. im Wesentlichen von der Mitte der Fussauflage oder einem Punkt auf der Mittelachse der Fussauflage) nach außen (d.h. zum Rand der Fussauflage hin) gestuft und/oder kaskadenförmig ansteigend ausgeführt sein. Zweckmässigerweise ist die Fussauflage von innen in mindestens zwei entgegengesetzte Richtungen zum Rand hin ansteigend geformt. Vorzugsweise ist sie in eine oder beide durch die Pedalachse definierte Richtungen und/oder zur Vorderseite (bzw. zur Fussspitze) und/oder zur Rückseite (bzw. zur Ferse) hin ansteigend ausgebildet. Die einzelnen Stufen können im Wesentlichen achsensymmetrisch sein, insbesondere in Bezug auf die Pedalachse oder eine zur Pedalachse parallele Achse. Die Anzahl von Stufen beträgt vorzugsweise mindestens 2, 3 oder 4 und/oder höchstens 15 5 oder 10. Nach einer besonders bevorzugten Ausgestaltungsvariante sind die Stufen im Wesentlichen ringförmig ausgebildet oder sie haben zumindest einen kreisförmigen (oder kreisbogenförmigen) Rand oder der Übergang zwischen zwei aufeinanderfolgenden Stufen ist im Wesentlichen kreisförmig (oder kreisbogenförmigen) ausgebildet. Es kann auch bevorzugt sein, wenn der äussere Rand der Fussauflage gestuft ist oder wenn die Stufen den Rand schneiden.

Gemäss einer weiteren bevorzugten Ausgestaltungsvariante ist die Fussauflage um eine dritte Drehachse drehbar mit der Basis oder mit der ersten Drehachse verbunden. Auch die dritte Drehachse ist vorzugsweise zusammen mit der Basis entlang der Pedalachse verschiebbar bzw. bewegbar. Diese Ausführungsform ist besonders geeignet für kraftschlüssige bzw. formschlüssige Schuh-Pedal-Verbindungen wie z.B. für Click-Systeme.

Die erste Drehachse ist bevorzugt durch die bzw. eine drehbare Verbindung des Pedals zum Tretkurbelarm definiert. Die Verbindung zwischen Pedal und Tretkurbelarm wird durch ein Pedalteil bzw. ein Gelenk hergestellt, welches eine Drehung um die erste Drehachse erlaubt. Dabei handelt es sich vorzugsweise um eine physische Pedalachse, insbesondere die übliche Pedalachse. Es sei bei Erwähnung der ersten Drehachse jeweils alternativ auch das genannte Pedalteil bzw. Gelenk, also insbesondere eine physische Pedalachse offenbart, soweit dies im jeweiligen Kontext sinnvoll ist. Entsprechend sei bei Erwähnung einer zweiten bzw. dritten Drehachse jeweils alternativ auch ein Pedalteil (z.B. ein weiter unten beschriebenes elastisch verformbares Element) oder Gelenk offenbart, welches eine Drehung um die zweite bzw. dritte Drehachse erlaubt (soweit dies im jeweiligen Kontext sinnvoll ist) bzw. ein Pedalteil oder Gelenk, das die entsprechende Drehachse definiert. Wenn im Folgenden also beispielsweise von der Verbindung zu einer Drehachse (respektive die Verbindung über eine Drehachse) gesprochen wird, so soll darunter vorzugsweise die Verbindung zu demjenigen Pedalteil (respektive die Verbindung über denjenigen Pedalteil) verstanden werden, der die Drehung um die genannte Drehachse (bzw. bei elastischer Verwringung im Sinne einer Drehachse) ermöglicht oder die genannte Drehachse definiert (z.B. Gelenk).

In diesem Sinne stellt die Basis zweckmässigerweise die Verbindung zwischen der Fussauflage und der ersten Drehachse dar. Die Fussauflage und die Basis (oder die Fussauflage und die erste Drehachse) sind mit Vorteil über die zweite und/oder dritte Drehachse (vgl. unten) verbunden.

Die zweite Drehachse ist vorzugsweise durch eine drehbare Verbindung der Fussauflage zur Basis (oder der Fussauflage zur ersten Drehachse) definiert. Die Verbindung zwischen Fussauflage und Basis (oder zwischen Fussauflage und erster Drehachse) wird mit Vorteil durch ein Pedalteil oder Gelenk hergestellt, welches eine Drehung um die zweite Drehachse erlaubt.

Die dritte Drehachse ist vorzugsweise durch eine drehbare Verbindung der Fussauflage zur Basis (oder der Fussauflage zur ersten Drehachse) definiert. Die Verbindung zwischen Fussauflage und Basis (oder zwischen Fussauflage und erster Drehachse) wird mit Vorteil durch ein Pedalteil oder Gelenk hergestellt, welches eine Drehung um die dritte Drehachse erlaubt.

Es ist auch denkbar, die Basis und die Fussauflage durch ein oder mehrere Pedalteile in Form von elastisch verformbaren Elementen (vgl. unten) zu verbinden. Dabei muss es sich nicht notwendigerweise gleichzeitig um Gelenke handeln. Alternativ können die Basis und/oder die Fussauflage selbst oder es kann die Oberfläche der Fussauflage ein elastisch verformbares Element sein (z.B. ein Gelkissen). Einige Ausführungsformen und bevorzugte Materialien für elastisch verformbare Elemente sind weiter unten beschrieben.

Allgemein kann gesagt werden, dass es von Vorteil ist, wenn solche elastisch verformbaren Elemente eine Drehung um die zweite und/oder um die dritte Drehachse ermöglichen.

Zum Beispiel können die Fussauflage und die Basis verbindende Schrauben durch stiftförmige elastisch verformbare Elemente (z.B. aus Gummi) ersetzt werden.

Es kann auch zweckmässig sein, ein oder mehrere elastisch verformbare Elemente vorzugsehen, die auf einer Seite mit der Fussauflage und auf der gegenüberliegenden Seite mit der Basis (oder mit der ersten Drehachse) verbunden sind. Ein solches Element kann z.B. im Wesentlichen die Form eines Balles aufweisen und ein Verkippen der Fussauflage ermöglichen.

Wenn von der Ausrichtung (z.B. "rechtwinklig", "quer") einer ersten und einer zweiten, sich nicht schneidender Geraden (z.B. erste und zweite Drehachse) die Rede ist, so soll darunter vorzugsweise die Ausrichtung der ersten Geraden relativ zur Parallelprojektion der zweiten Geraden auf die erste Gerade gemeint sein, und zwar mit Vorteil die Projektion parallel zur kürzesten Verbindungstrecke zwischen den zwei Geraden.

Die zweite Drehachse ist zweckmässigerweise quer (vorzugsweise im Wesentlichen rechtwinklig) zur ersten Drehachse angeordnet bzw. ausgerichtet. Mit Vorteil ist sie quer (vorzugsweise im Wesentlichen rechtwinklig) zur durch die Fussauflage definierten Ebene ausgerichtet. Sie kann jedoch auch in einem Winkel von 0 bis 30, insbesondere 0 bis 10 Grad zur genannten Ebene ausgerichtet sein. Abweichungen von 0 bis 30 Grad, vorzugsweise von 0 bis 10 Grad von einer oder beiden der genannten rechtwinkligen Stellungen können jeweils vorgesehen sein.

Die dritte Drehachse ist mit Vorteil quer (vorzugsweise im Wesentlichen rechtwinklig) zur ersten Drehachse und quer (vorzugsweise im Wesentlichen rechtwinklig) zur zweiten Drehachse angeordnet bzw. ausgerichtet. Abweichungen von 0 bis 30 Grad, vorzugsweise von 0 bis 10 Grad von einer rechtwinkligen Stellung können jeweils vorgesehen sein. Alternativ könnte man auch sagen, dass die dritte Drehachse mit Vorteil (im Wesentlichen) in Fahrtrichtung oder in Fusslängsrichtung eines auf dem Pedal aufliegenden Fusses ausgerichtet ist.

Mit der Verschiebung bzw. Bewegung der Basis bzw. der Fussauflage entlang der ersten Drehachse ist vorzugsweise gemeint, dass die Basis bzw. die Fussauflage in eine erste Verschiebungsrichtung und in eine der ersten Verschiebungsrichtung entgegengesetzte zweite Verschiebungsrichtung verschiebbar ist. Bei Verbindung des Pedals mit einem Tretkurbelarm entspricht die erste Verschiebungsrichtung z.B. einer Richtung hin zum Tretkurbelarm oder hin zu einem ersten Ende der ersten Drehachse und die zweite Verschiebungsrichtung entspricht einer Richtung vom Tretkurbelarm weg oder hin zum zweiten Ende der ersten Drehachse. Zweckmässigerweise erfolgt die beschriebene Verschiebung in gerader Linie.

Gemäß einer bevorzugten Ausgestaltungsform ist die Basis parallel oder im Wesentlichen parallel zur ersten Drehachse verschiebbar. Dies ist konstruktiv sehr einfach zu bewerkstelligen. Beispielsweise kann die Basis die (physische) Pedalachse umgreifen und/oder eine Aufnahme für die Pedalachse bilden. Auf diese Weise kann die Pedalachse selbst die Führung für die Basis bilden. Alternativ oder zusätzlich dazu können parallel oder im Wesentlichen parallel zur ersten Drehachse eine, zwei oder mehr Führungsschienen vorgesehen sein, die mit der Basis zusammenwirken.

Wenn von einer "freien Bewegung" (z:B. "frei drehbar", "frei verschiebbar", "freies Zusammenspiel" etc.) die Rede ist, so soll darunter bevorzugt zu verstehen sein, dass die in Frage stehende Bewegung isoliert von einer spezifischen anderen Bewegung oder isoliert von allen anderen Bewegungen ausführbar ist oder dass die Bewegung nicht durch eine spezifische andere oder irgendeine andere Bewegung bedingt ist. Unter einer "freien Bewegung" kann alternativ auch eine nicht-zwangsgeführte Bewegung zu verstehen sein.

Die Basis ist mit Vorteil (insbesondere relativ zum Tretkurbelarm) um die erste Drehachse drehbar, vorzugsweise frei drehbar. Dadurch wird eine verbesserte Fiexion/Extension ermöglicht. Dies im Gegensatz zu einer Konstruktion bei der die Lage der Basis an die Stellung bzw. Bewegung des Tretkurbelarms gekoppelt ist.

Nach einer besonders vorteilhaften Ausgestaltungsvariante erlaubt die Konstruktion des Pedals ein freies Zusammenspiel zwischen der Verschiebung der Basis entlang der ersten Drehachse und der Drehung der Fussauflage um die zweite und/oder dritte Drehachse, bevorzugt auch in Kombination mit einer Drehung um die erste Drehachse. Mit anderen Worten ist das Pedal so ausgebildet, dass dieses freie Zusammenspiel ermöglicht ist.

Es ist von Vorteil, wenn die Verschiebung der Basis entlang der ersten Drehachse frei ist. Mit Vorteil ist die Verschiebung insbesondere nicht an die Bewegung des (mit der ersten Drehachse verbundenen) Tretkurbelarms und/oder an die Drehung der Fussauflage um die zweite und/oder dritte Drehachse gekoppelt oder durch diese bedingt.

Weiterhin ist es zweckmässig, wenn die Drehung der Fussauflage um die zweite und/oder dritte Drehachse frei ist. Mit Vorteil ist die Drehung insbesondere nicht an die Bewegung des (mit der ersten Drehachse verbundenen) Tretkurbelarms und/oder die Verschiebung der Basis entlang der ersten Drehachse gekoppelt oder durch diese bedingt.

Die zusätzlichen Freiheitsgrade, welche sich dadurch für den Fuss respektive das Bein ergeben, gelten als physiologisch und sind daher biomechanisch sehr vorteilhaft, was insbesondere beim medizinischen Einsatz sinnvoll ist.

Durch die Verschiebbarkeit der Basis bzw. der Fussauflage entlang der ersten Drehachse und die Drehbarkeit der Fussauflage um die zweite Drehachse kann neben der Beugung und Streckung (Extension/Flexion) des Beins in Hüfte, Knie und Fuß ein An- und Abspreizen des Beines insbesondere in Hüfte und Knie (Adduktion / Abduktion) stattfinden. Zudem kann eine Einwärts-Auswärts-Drehbewegungen des Beines in Hüfte, Knie und Fuß (Innen- /Aussenrotation) erfolgen. Darüber hinaus können sich Oberschenkel und Unterschenkel bedarfsgerecht im Zuge des Beugens und Streckens des Beine abwechselnd in Sinne einer O-Bein und X-Bein Winkelbildung (Varisierung / Valgisierung) zueinander bewegen. Letzteres wird durch die sagittalen Achsen zz' (vgl. Fig.8 und 10) in Hüfte und Knie nach dem aktuellen biomechanischen Wissensstand verlangt. Wenn zusätzlich eine beschriebene dritte Drehachse vorgesehen ist, kann darüber hinaus eine Neigung des Fusses nach innen bzw. aussen, d.h. ein wechselseitiges Auf- und Abkanten des inneren bzw. äusseren Fussrandes erfolgen (Supination/Pronation), dies insbesondere auch dann, wenn Schuh und Pedal bzw. Schuhauflage kraft- bzw. formschlüssig miteinander verbunden sind, z.B. durch Click- oder Rastverbindungen.

Eine besonders einfache, kompakte Konstruktion des erfindungsgemässen Pedals wird dadurch möglich, dass die Fussauflage um die zweite Drehachse (vorzugsweise frei) drehbar mit der Basis (oder mit der ersten Drehachse) verbunden und die zweite Drehachse zusammen mit der Fussauflage und/oder der Basis (vorzugsweise frei) entlang der ersten Drehachse verschiebbar ist. Die Fussauflage kann so auf den Ballenbereich des Fusses beschränkt bleiben und muss sich nicht bis zur Ferse erstrecken. Dennoch ist durch diese Konstruktion eine Schwenkbewegung mit einem virtuellen Drehpunkt im Fersenbereich ermöglicht. Das ist bewegungstechnisch sehr vorteilhaft, da die virtuelle Drehachse, welche den virtuellen Drehpunkt im Fersenbereich definiert, funktionell anatomisch der Unterschenkelachse yy' (vgl. Fig.8 und 10) entspricht. Die virtuelle Drehachse ist aber nicht notwendigerweise (relativ zur ersten Drehachse) feststehend, wie dies aus dem Stand der Technik bekannt ist. Mit anderen Worten ist es bevorzugt, wenn der virtuelle Drehpunkt bzw. die virtuelle Drehachse nicht immer in einer Ebene angeordnet ist, die parallel zur durch die Bewegung (Kreisbahn) des Tretkurbelarms definierten Ebene ausgerichtet ist. Es ist von Vorteil, wenn der virtuelle Drehpunkt bzw. die virtuelle Drehachse diese Ebene beliebig verlassen und sich frei z.B. in anderen sagittalen Ebenen respektive frontalen Ebenen bewegen kann. Der virtuelle Drehpunkt kann somit seine Entfernung von der durch den Tretkurbelarm definierten Ebene verändern. Eine Abduktion/Adduktion insbesondere in der Hüfte und im Knie, sowie eine physiologische, biomechanisch konforme, kontinuierlich wechselnde O- bzw. X-Beinbildung zwischen Ober-und Unterschenkel im Zuge von Beugung und Streckung werden so erstmals mit weiteren Freiheitsgraden kombinierbar möglich. So kann das Bein respektive der Fuss - entsprechend der Gelenkmorphologie und resultierenden Kinematik - bedarfsgerecht eine freie Extension /Flexion mit freier Abduktion / Adduktion und freier Varisierung /Valgiserung und auch eine freie Innen- und Außenrotation kombiniert ausführen. Damit können alle aktiven und passiven Beteiligten einer Beinbewegung noch besser ihre separate und/oder ihre natürliche komplexe Bewegungsarbeit ausführen, wie sie physiologisch z.B. bei zyklischen Beuge-Streck-Bewegungen analog dem Fahrradfahren erfolgen. Das System erlangt dadurch erweiterte Sinnhaftigkeit nicht nur hinsichtlich geringer Gelenkbelastung, sondern auch hinsichtlich Therapie und Schulung bei neuromusklulären Erkrankungen, da diese effizient nur im komplexen wechselseitigen Zusammenspiel aller Agonisten und Antagonisten therapiert werden können. Das gilt ebenso für Therapie und Prävention muskulärer Dysbalancen und für Stoffwechsel- sowie durchblutungsbedingte und lymphatische Störungen.

Bei einem Fahrradpedal ist es von Vorteil, wenn die Basis um mindestens 2, 3 oder 4 cm und/oder höchstens 25,15,10 oder 5 cm entlang der ersten Drehachse verschiebbar ist.

Für stationäre Geräte wie Ergometer oder Crosstrainer ist es von Vorteil, wenn die Basis um mindestens 4, 5 oder 10 cm und/oder höchsten 45, 30, 20 oder 15 cm entlang der ersten Drehachse verschiebbar ist.

Wünschenswert ist es zudem, wenn die Fussauflage mindestens um einen Winkel von 5,10 oder 15 Grad und/oder um höchstens 60, 45 oder 30 Grad um die zweite Drehachse drehbar ist.

Weiterhin ist es von Vorteil, wenn die Fussauflage mindestens um einen Winkel von 2, 5 oder 10 Grad und/oder um höchstens 40, 30 oder 20 Grad um die dritte Drehachse drehbar ist.

Zweckmäßigerweise können Anschläge vorgesehen sein, welche die Bewegung (Verschiebung bzw. Drehung) in die beiden Bewegungsrichtungen begrenzen (und damit beispielsweise den maximalen Drehwinkel definieren). Mit Vorteil ist die Verschiebung der Basis in beide Verschiebungsrichtungen durch einen Anschlag begrenzt. Die Drehung um die zweite und/oder dritte Drehachse ist vorzugsweise in beide Drehrichtungen durch einen Anschlag begrenzt.

Die erste Drehachse (als Pedalteil) ist zweckmässigerweise im Bereich des Fussballens bzw. unterhalb des Fussballens eines auf der Fussauflage ruhenden Fusses, insbesondere im Bereich des Fussballens des Grosszehs angeordnet.

Die zweite Drehachse ist mit Vorteil in Fahrtrichtung vor oder hinter der ersten Drehachse angeordnet, wobei Letzteres bevorzugt ist. Dadurch wird eine kompakte Konstruktion und über eine optimale Positionierung des Fußes eine optimale Kraftübertragung auf das Pedal ermöglicht. Die Fussauflage kann sich von der zweiten Drehachse über die erste Drehachse erstrecken.

Es kann jedoch auch zweckmässig sein, wenn die zweite Drehachse (als Pedalteil) über oder unter der Pedalachse angeordnet ist und/oder wenn die zweite Drehachse die erste Drehachse schneidet. Weiterhin kann es von Vorteil sein, wenn die zweite Drehachse (als Pedalteil; z.B. als elastisch verformbares Element) auf der Fußauflagefläche angeordnet ist.

Nach einer bevorzugten Ausgestaltungsvariante verläuft die zweite Drehachse durch die Fussauflage und/oder durch die Basis. Es ist jedoch vorteilhaft, wenn die oben genannte virtuelle Drehachse im Fersenbereich oder die Mehrzahl der möglichen virtuellen Drehachsen nicht durch die Fussauflage und/oder durch die Basis verlaufen. Es ist nämlich ein Ziel, trotz kompakter Bauform einen virtuellen Drehpunkt der Fussauflage respektive des Fusses im Fersenbereich zu schaffen.

Es ist wünschenswert, dass die Fussauflage einen Befestigungsmechanismus und/oder einen Positionierungsmechanismus zur Befestigung bzw. Positionierung eines Schuhs aufweist. Dieser Mechanismus oder ein Teil davon ist mit Vorteil entlang (insbesondere parallel zur) ersten Drehachse und/oder in Fahrtrichtung bzw. in Fusslängsrichtung eines auf dem Pedal aufliegenden Fusses verstellbar oder bewegbar ausgebildet, wobei eine Verstellbarkeit bzw. Bewegbarkeit relativ zur Fussauflage gemeint ist. Dadurch lässt sich eine bewegungs- und leistungsbedarfsgerechte Fussposition einrichten.

Weiterhin ist es von Vorteil, wenn die Bewegung bzw. Verschiebung der Basis entlang der ersten Drehachse in eine oder beide (d.h. die erste und die zweite) Verschiebungsrichtungen gefedert und/oder gedämpft ist. Besonders bevorzugt ist die Bewegung beidseitig, d.h. in beide Verschiebungsrichtungen gefedert und/oder gedämpft. Die Federung kann durch ein, zwei oder mehr Federelemente, die Dämpfung durch ein, zwei oder mehr Dämpfungselemente erreicht werden. Wenn zu diesem Zweck nur ein Federelement und/oder ein Dämpfungselement vorgesehen sind, so bewirkt dieses vorzugsweise in beide Verschiebungsrichtungen eine Federung und/oder Dämpfung. Nach einer alternativen Definition ist das Pedal so ausgebildet, dass die Bewegungsenergie in eine Verschiebungsrichtung ganz oder teilweise durch ein Element (z.B. Tonnenfeder oder Spiralfeder) aufgenommen werden kann, wobei die Bewegungsenergie durch das Element gegebenenfalls wieder in Form von Bewegungsenergie in die andere Verschiebungsrichtung abgegeben und so eine Rückstellwirkung erzielt werden kann. Zweckmässigerweise kann das Feder- oder Dämpfungselement in zwei einander entgegengesetzte Verschiebungsrichtungen (z.B. auf Zug und auf Druck) beanspruchbar sein, d.h. seine Feder- oder Dämpfungswirkung entfalten.

Auch die Drehung der Fussauflage um die zweite und/oder dritte Drehachse ist mit Vorteil in eine oder beide Drehrichtungen gefedert und/oder gedämpft. Das oben in Bezug auf die Verschiebung entlang der ersten Drehachse Gesagte trifft - soweit anwendbar - mit Vorteil auch auf die Drehung um die zweite und/oder dritte Drehachse zu, wobei die Begriffe "Verschiebung" durch "Drehung" und "Verschiebungsrichtung" durch "Drehrichtung" zu ersetzen sind.

Das Pedal kann auch so ausgestaltet sein, dass die erwähnte Dämpfung während der Verschiebung entlang der ersten Drehachse durch Arbeit bzw. eine Bewegung gegen die Schwerkraft erfolgt. Es besteht z.B. die Möglichkeit, das Pedal so auszugestalten, dass eine Aufwärtsbewegung und eine Abwärtsbewegung der Fussauflage relativ zur ersten Drehachse ermöglicht sind. Die Bewegung folgt dabei mit Vorteil einer einfach gekrümmten Kurve, die in einer entlang der ersten Drehachse verlaufenden Ebene liegt. Die Enden der Kurve sind nach oben gerichtet. Diese Ausführung hat eine funktionelle Dämpfung und damit eine Stabilisierung der Fussbewegung zur Folge, die das Resultat einer Bewegung bzw. von Arbeit gegen die Schwerkraft ist.

Für die Verschiebung der Basis entlang der ersten Drehachse sind die oben genannten Feder- bzw. Dämpfungselemente vorzugsweise (etwa) in der Mitte der Basis oder beidseitig der Basis im Bereich der ersten Drehachse angeordnet. Bei dem oder den Federelementen handelt es sich vorzugsweise um Tonnenfedern oder Blattfedern oder Schraubenfedern (insbesondere tonnenförmige oder kegelförmige Schraubenfedern, da diese im komprimierten Zustand weniger Platz benötigen). Die Pedalachse kann sich zweckmässigerweise durch die genannten Elemente hindurch erstrecken.

Nach einer besonders bevorzugten Ausgestaltungsvariante werden die Federung und/oder die Dämpfung der oben beschriebenen Bewegungen (Verschiebung entlang der ersten Drehachse und/oder Drehung um die zweite und/oder dritte Drehachse) durch elastisch verformbare Elemente, insbesondere aus Polymer (vorzugsweise Kautschuk) oder Kunststoff oder durch gummielastische Elemente erreicht.

Es kann bevorzugt sein, die Basis und die Fussauflage (und/oder die Fussauflage und die erste Drehachse) durch ein oder mehrere elastisch verformbare Elemente zu verbinden. Alternativ oder zusätzlich kann die Fussauflage selbst oder deren Oberfläche ein elastisch verformbares Element sein oder ein solches enthalten (z.B. ein Gelkissen). Bevorzugte Materialien für die genannten Pedalteile sind thermoplastische Elastomere (TPE), insbesondere auf Urethanbasis (TPU). Auch die Basis kann elastisch verformbare Elemente enthalten oder selbst ein solches sein.

Von besonderem Interesse sind auch Pedale, bei denen die Fussauflage und/oder die Basis aus einem Elastomer oder einem anderen in diesem Dokument genannten Kunststoff oder Polymer gefertigt sind (vgl. auch bevorzugte shore-Härten weiter unten). Die Fussauflage und/oder die Basis können ganz oder zum überwiegenden Teil (insbesondere zu mindestens 50, 75, 90 oder 95 Prozent bezogen auf das Volumen) aus einem oder mehreren der genannten Materialien bestehen.

Auch unabhängig davon kann gesagt werden, dass es von Vorteil ist, wenn solche elastisch verformbaren Elemente eine Drehung um die zweite und/oder um die dritte Drehachse ermöglichen. Alternativ oder zusätzlich kann es zweckmässig sein, wenn die genannten elastisch verformbaren Elemente eine Dämpfung oder Federung der genannten Drehung und/oder der Verschiebung entlang der ersten Drehachse ermöglichen. Solche elastisch verformbaren Elemente können vorzugsweise sowohl die Drehbarkeit als auch die Dämpfung bzw. Federung der Drehbewegung und/oder der Verschiebung gewährleisten.

Nach einer weiteren bevorzugten Ausgestaltungsvariante sind ein oder mehrere elastisch verformbare Elemente vorgesehen, die auf einer Seite mit der Fussauflage und auf der gegenüberliegenden Seite mit der Basis verbunden sind. Diese Verbindung kann beispielsweise durch Vulkanisation, Verkleben oder Formschluss hergestellt werden. Zum Beispiel können aber auch die Fussauflage und die Basis verbindende Schrauben durch stiftförmige elastisch verformbare Elemente (z.B. aus Gummi) ersetzt werden.

Es kann auch bevorzugt sein, wenn die elastisch verformbaren Elemente oder Teile (insbesondere der grössere Teil) davon auf 95, 90, 80 oder 60 Prozent ihres Volumens komprimierbar sind und zwar durch die "normalen", während des Fahrens auf das Pedal wirkenden Kräfte. Sie können zu diesem Zweck beispielsweise eine Mehrzahl von Hohlräumen und/oder eine Schwammstruktur aufweisen.

Alternativ können die elastisch verformbaren Elemente die Form von Federn, insbesondere Schraubenfedern oder Blattfedern haben. Wie oben erwähnt, ist als bevorzugtes Material Polymer z.B. ein Polyurethan vorgesehen. Die Elastizität kann hierbei durch die Form und/oder die Materialeigenschaften der Elemente erreicht werden und bedarf nicht notwendigerweise einer Volumenveränderung.

Allgemein kann es vorteilhaft sein, wenn die elastisch verformbaren Elemente und/oder die Federelemente und/oder die Dämpfungselemente (insbesondere vollständig) aus nicht-metallischem Material und/oder aus Polymer (vorzugsweise einem thermoplastischen Elastomer (TPE) oder (TPU) gefertigt sind.

Es kann jedoch auch zweckmässig sein, die elastisch verformbaren Elemente als Hohlkörper (insbesondere mit 1, 2, 3, 4 und/oder höchstens 100, 50, 20 oder 10 Hohlräumen) auszugestalten, insbesondere als mit einem Gas (vorzugsweise Luft), einer Flüssigkeit oder einem Gel gefüllte Hohlkörper. Deren Wand ist vorzugsweise aus Polymer oder einem der anderen genannten Materialien gefertigt.

Die elastisch verformbaren Elemente bzw. die Federelemente und/oder Dämpfungselemente können hohl sein. Weiterhin ist es bevorzugt, wenn sie im Wesentlichen die Form von Rotationskörpem, insbesondere Kugeln aufweisen. Es kann von Vorteil sein, wenn sie weniger als 10, 6 oder 4 und insbesondere 1 oder 2 Öffnungen aufweisen.

Es hat sich als nützlich erwiesen, wenn die Pedalachse und/oder (falls vorhanden) die oben genannten Führungsschienen solche elastisch verformbaren Elemente durchdringen und/oder wenn solche Elemente die Pedalachse und/oder die Führungsschienen umgeben. Insbesondere können sie sich bevorzugt von der Basis bis zu den Enden der Pedalachse oder der Führungsschienen (oder bis zu den Enden der Verschiebungswege der Basis entlang der ersten Drehachse) erstrecken und die Pedalachse bzw. die Führungsschienen so vor Schmutz schützen.

Es kann jedoch ganz allgemein, d.h. unabhängig von den beschriebenen Bewegungen, Gelenken etc. vorteilhaft sein, wenn das Pedal eines, zwei, drei, vier oder mehr der genannten elastisch verformbaren Elemente aufweist.

Solche elastisch verformbaren Elemente sollen es erlauben, bei freier, d.h. nicht-zwangsgeführter Beweglichkeit eine die Bewegungsausführung stabilisierende Dämpfung zu gewährleisten.

Die größeren Bewegungsfreiräume sollen nach einer bevorzugten Ausgestaltungsvariante nicht allein durch übliche Achslager, sondern durch die Verwendung der genannten elastischen Elemente, allein oder in Kombination mit üblichen Lagern, realisiert werden.

Die zweite und/oder dritte Drehachse ist vorzugsweise durch ein längsstabiles Dämpfungs- bzw. Federelement definiert bzw. gebildet.

Nach einer weiteren vorteilhaften Ausgestaltungsvariante sind auf einer der Basis zugewandten und/oder einer von der Basis abgewandten Seite eines Federelements oder Dämpfungselements ein oder mehrere Bauteile, insbesondere Abstandshalter, vorgesehen. Dies kann auch für 2, 3, 4 oder mehr der Elemente gelten. Dabei kann es sich z.B. um Distanzringe oder Distanzhülsen handeln. Das Bauteil ist vorzugsweise zwischen Basis und Federelement bzw. Dämpfungselement angeordnet oder das Federelement bzw. Dämpfungselement ist zwischen dem Bauteil und der Basis positioniert. Das Bauteil kann also einseitig oder beidseitig der Basis vorgesehen sein. Bevorzugt ist das Bauteil lösbar am Pedal, insbesondere an der Pedalachse oder den Führungsschienen, befestigbar. Im befestigten Zustand umgreift das Bauteil vorzugsweise die Pedalachse oder die Führungsschienen. Weiterhin kann es von Vorteil sein, wenn das Bauteil ein Abstandshalter ist und wenn der durch den Abstandshalter definierte Abstand (z.B. entsprechend der Länge oder Breite des Abstandshalters) fix oder veränderbar ist. Ist der Abstand fix, so kann z.B. die Anzahl der Abstandshalter auf einer oder beiden Seiten der Basis geändert werden. Alternativ kann ein Abstandshalter durch einen Grösseren oder Kleineren ersetzt werden. Je nach Ausgestaltung des Bauteils kann so die Ausgangsposition der Basis auf der Pedalachse und/oder die Federkraft respektive die Federkräfte und deren spezifische Kennlinie einfach und besonders bedarfsgerecht angepasst werden. Eine bevorzugte Anzahl der genannten Bauteile (pro Pedal) beträgt mindestens 1, 2, 3 oder 4 und/oder höchstens 20 oder 10.

Allgemein ist ein Pedal bevorzugt, wenn es sich dadurch auszeichnete, dass auf dem Verschiebungsweg der Basis entlang der ersten Drehachse ein oder mehrere den Verschiebungsweg verkürzende Abstandshalter vorgesehen sind, welche vorzugsweise entlang der ersten Drehachse verschiebbar sind, wobei bevorzugt auf einer oder beiden Seiten der Basis solche Abstandshalter vorgesehen sind.

Wenn in diesem Dokumente von der "Stärke" eines elastisch verformbaren Elements oder eines Federelements oder eines Dämpfungselements oder einer Federung oder einer Dämpfung die Rede ist, so sei darunter vorzugsweise die notwendige Energie für eine (zerstörungsfreie) halbmaximale Auslenkung des Elements zu verstehen (z.B. bei einer Auslenkungsgeschwindigkeit von 1 m/s). Die Angaben beziehen sich vorzugsweise auf das Element im eingebauten Zustand (ohne Belastung des Pedals).

Wie erwähnt, können die elastisch verformbaren Elemente und/oder die Federelemente und/oder die Dämpfungselemente beidseitig der Basis und/oder beidseitig der Fussauflage angeordnet sein. Es kann dann zweckmässig sein, das Element bzw. die Elemente auf der einen Seite der Basis in Bezug auf ihre Stärke anders auszugestalten als auf der anderen Seite. Insbesondere können die Elemente auf der einen Seite einzeln oder in Summe (insbesondere mindestens 10, 20, 40 oder 60 Prozent) stärker sein als die Elemente auf der anderen Seite (einzeln oder in Summe). Bezugspunkt ist das Pedal im Gleichgewichtszustand bzw. im unbelasteten Zustand. Dadurch kann eine Optimierung des Bewegungsablaufs erreicht werden.

Es besteht natürlich auch die Möglichkeit, diesen Effekt durch andere Mittel als zwei beidseitig angeordnete Elemente zu erreichen, beispielsweise ein einzelnes Element, das bei Beanspruchung auf Zug unterschiedlich stark ist als bei Beanspruchung auf Druck.

Deshalb kann es unabhängig vom gewählten Mittel gewünscht sein, wenn die Federung und/oder Dämpfung in die eine Verschiebungsrichtung entlang der ersten Drehachse und die Federung und/oder Dämpfung in die andere, entgegengesetzte Verschiebungsrichtung unterschiedlich, insbesondere unterschiedlich stark sind. Die Federung und/oder Dämpfung in die eine Verschiebungsrichtung ist bevorzugt mindestens 10, 20, 40 oder 60 Prozent stärker als in die andere Verschiebungsrichtung. Bevorzugt ist die Federung und/oder Dämpfung auf der inneren Seite (d.h. der dem Tretkurbelarm bzw. dem anderen/zweiten Pedal näheren Seite) geringer.

Das Gesagte kann auch in Bezug auf die beiden Drehrichtungen (links/rechts) bei Drehung um die zweite und/oder bei Drehung um die dritte Drehachse von Vorteil sein, wenn diese gedämpft und/oder gefedert sind.

Nach einer weiteren bevorzugten Ausgestaltungsform sind die elastisch verformbaren Elemente und/oder die Federelemente und/oder die Dämpfungselemente in Bezug auf ihre Stärke variabel und/oder einstellbar (z.B. über den Gasdruck in den oben genannten Hohlkörpem). Dadurch können die Fahreigenschaften an den Trainingszustand, den therapeutischen Belastungsbedarf und/oder das Gewicht und die Kraft des Benutzers angepasst werden.

Alternativ oder zusätzlich dazu ist es vorteilhaft, wenn die elastisch verformbaren Elemente und/oder die Federelemente und/oder die Dämpfungselemente von Hand und/oder ohne Zuhilfenahme von Maschinen und/oder zerstörungsfrei auswechselbar sind (z.B. innerhalb von 30, 20 oder 10 Minuten). Elastisch verformbare Elemente und/oder Federelemente und/oder Dämpfungselemente unterschiedlicher Stärke könnten beispielsweise als Kit oder Set zusammen verkauft werden, allenfalls zusammen mit einem erfindungsgemässen Pedal. Die genannten Elemente sind also zweckmässigerweise darauf ausgelegt, vom Anwender ausgetauscht zu werden. Diese Austauschbarkeit ist ein deutlicher Vorteil gegenüber tripologischen Lösungen, insbesondere in der Therapie.

Weiterhin ist es von Vorteil, wenn die Basis in Sandwich-Bauweise ausgeführt ist. Zweckmässigerweise weist die Basis ein Gehäuse auf mit zwei Teilen, die entlang der ersten Drehachse bzw. der Pedalachse lösbar miteinander verbunden sind und/oder entlang der genannten Achse in Kontakt stehen und/oder die Pedalachse zwischen sich aufnehmen. Die beiden Teile können z.B. zur Verbindung miteinander fluchtende Gewinde aufweisen, in die Schrauben aufnehmbar sind. Die Schrauben erstrecken sich bevorzugt an der ersten Drehachse vorbei z.B. von der Fussauflage nach unten oder umgekehrt. Diese Massnahme erlaubt einen servicefreundlichen Zugang zu den Lagern sowie eine Austauschbarkeit der Fußauflagefläche. So können Fussauflageflächen gegen anders ausgestaltete Fussauflageflächen, die andere oder zusätzliche Funktionen haben (z.B. mit Click-Verbindung), ausgetauscht werden.

Unter einer lösbaren Verbindung kann die Verwendung von Befestigungsmitteln verstanden werden, die dazu ausgebildet sind, wiederholt gelöst und wieder befestigt zu werden.

Die Fussauflage und/oder die Basis können (vorzugsweise zum größeren Teil oder ganz) aus Polymer gefertigt sein, insbesondere aus Polyoxymethylen (POM), Polyamid (PA) oder Delvir. Dies spart Gewicht. Werden solche Polymere eingesetzt, so kann auf Lager zur zentralen Abstützung des Pedalkörpers auf der Pedalachse verzichtet werden.

Nach einer bevorzugten Ausgestaltung kann das Pedal zwei einander in Bezug auf die Basis und/oder in Bezug auf die erste Drehachse gegenüberliegende Fussauflagen aufweisen und dadurch beidseitig verwendbar sein. Die Fussauflagen sind dann zweckmässigerweise durch ein oder mehrere Verbindungsglieder miteinander verbunden, wobei diese bevorzugt im Abstand von der Basis und/oder im Bereich des äusseren Randes der Fussauflagen mit den Fussauflagen verbunden sind (und zwar vorzugsweise an den einander zugewandten Seiten der Fussauflagen). Die Verbindungsglieder können auf einer oder beiden Seiten der ersten Drehachse d.h. der (in Fahrtrichtung) vorderen und/oder hinteren Seite angeordnet sein. Sie sind vorzugsweise in einer Anzahl von 2 bis 20, vorzugsweise 4 bis 15 vorhanden und können z.B. die Form von (vorzugsweise miteinander verschraubbaren) Stiften oder von Schrauben haben. Die Verbindungsglieder erlauben eine Abstützung der sich gerade in Benutzung befindlichen Fussauflage auf die andere Fussauflage, vor allem im äusseren Bereich bzw. im Randbereich.

Diese Ausführungsform hat den Vorteil, dass die Teile auch in Fertigungsverfahren wie Guss in Metall oder Kunststoff-oder Hybrid-Verbunden ausgeführt werden können, die ohne die oben beschriebene Abstützung bzw. Verschraubungen nicht normgerecht tragstabil für das Gewicht und die Kräfte des Nutzers wären.

In Bezug auf die Lagerung der Basis sind folgenden Ausgestaltungsvarianten bevorzugt:

Nach einer ersten Variante steht die Basis über ein, zwei oder mehr Lager (insbesondere Gleitlager oder Wälzkörperlager) in Kontakt mit der Pedalachse und/oder den Führungsschienen. Vorzugsweise ist das Lager zwischen der Basis und der Pedalachse und/oder den Führungsschienen angeordnet. Zweckmässigerweise ist die Position der Basis relativ zum Lager (bzw. relativ zum mit der Basis verbundenen Teil des Lagers) fixiert. Wenn ein Lager vorgesehen ist, so kann dieses in Bezug auf die Basis im Wesentlichen mittig positioniert sein oder sich von einer Seite der Basis zur anderen Seite erstrecken. Besonders vorteilhaft ist es jedoch, wenn zwei voneinander getrennte Lager vorgesehen sind. Dann ist es zweckmässig, wenn eines der Lager auf einer Seite der Basis angeordnet ist und das andere auf der anderen Seite der Basis angeordnet ist. Zweckmässigerweise ist die Basis zwischen den beiden Lagern im Abstand von der Pedalachse und/oder den Führungsschienen angeordnet. Ein bevorzugter Abstand beträgt mindestens 0,25 oder 0,5 oder 1 oder 2 oder 4 mm.

Nach einer zweiten Variante steht die Basis direkt (insbesondere nicht über ein eigenständiges Lager) mit der Pedalachse und/oder den Führungsschienen in Verbindung. Alternativ könnte man auch sagen, dass der mit der Pedalachse und/oder den Führungsschienen in (direkten) Kontakt tretende Teil der Basis relativ zur Basis und/oder zur Fussauflage unbeweglich (insbesondere drehfest) ist und relativ zur Pedalachse und/oder zu den Führungsschienen beweglich ist und insbesondere über oder um diese herum gleitet. In dieser Ausführungsvariante ist vorzugsweise entweder das Material der Basis (oder zumindest des mit der Pedalachse bzw. den Führungsschienen in Kontakt tretenden Teils derselben) als Lager geeignet (z.B. POM -Kunststoffe) und/oder durch Nachbearbeitung, wie beispielsweise Härtung, lagertauglich hergestellt. Die zweite Variante erlaubt eine kostengünstige Herstellung des Pedals.

Unabhängig von der Art des Lagers kann es vorteilhaft sein, wenn insbesondere auf der von der Basis abgewandten Seite des äussersten Lagers (oder der äussersten Lager) eine mit der Pedalachse und/oder den Führungsschienen in Kontakt stehende Abstreifvorrichtung vorgesehen ist. Diese verhindert die Verschmutzung.

Eine dritte Ausgestaltungsvariante sieht vor, dass die Basis und/oder die Fussauflage im Abstand von der Pedalachse und/oder den Führungsschienen angeordnet ist und insbesondere nicht in direkten Kontakt mit diesen steht (die Basis stellt in diesem Beispiel also keinen direkten Kontakt zur Pedalachse her). Ein bevorzugter Abstand beträgt mindestens 0,25 oder 0,5 oder 1 oder 2 oder 4 mm und/oder höchstens 20,15 oder 10 mm. Die Verbindung der Basis und/oder Fussauflage zur Pedalachse wird dann vorzugsweise durch die elastisch verformbaren Elemente bzw. die Federelemente oder Dämpfungselemente hergestellt. Die Elemente können auf einer Seite mit der Pedalachse (insbesondere drehbar z.B. über eine Fixierung an einem Wälzkörperlager) verbunden sein und auf der anderen Seite mit der Fussauflage und/oder Basis (vorzugsweise ohne die Pedalachse zu berühren), wobei die Elemente die Basis und/oder Fussauflage im Abstand von der Pedalachse und/oder den Führungsschienen halten. Es kann vorteilhaft sein, wenn das (vorzugsweise über ein Lager) mit der Pedalachse verbundene Ende des Elements nicht entlang der Pedalachse verschiebbar ist.

Alternativ könnte man sagen, dass es bevorzugt ist, wenn die (in Bezug auf die Verschiebung entlang der ersten Drehachse) relativ zu einander beweglichen Teile (insbesondere die Basis und/oder die Fussauflage relativ zur Pedalachse und/oder den Führungsschienen) sich nicht berühren.

Auf diese Weise kann (je nach Ausgestaltung) auch eine Beweglichkeit der Basis quer zur Verschiebungsrichtung entlang der ersten Drehachse erreicht werden. Wird die Verbindung zwischen Basis und/oder Fussauflage und Pedalachse durch dieselben elastisch verformbaren Elemente oder Federelemente bzw. Dämpfungselemente hergestellt, die eine Federung bzw. Dämpfung der Verschiebung entlang der ersten Drehachse erlauben, so kann durch sie zweckmässigerweise auch die Bewegung quer zur Verschiebungsrichtung gefedert und/oder gedämpft werden. Bei einem solchen Pedal ist die Verschiebung entlang der ersten Drehachse nicht notwendigerweise parallel zur Pedalachse gerichtet und/oder nicht notwendigerweise linear.

Besonders bevorzugt ist ein Pedal, das sich dadurch auszeichnet, dass die Basis und/oder die Fussauflage auf einer oder beiden Seiten über ein elastisch verformbares Element und/oder ein Federelement oder Dämpfungselement (insbesondere eine oder mehrere Blattfedern) mit einem Lager verbunden ist. Das Lager (insbesondere ein Wälzkörperlager) ist seitlich der Basis und/oder der Fussauflage angeordnet, von der Basis und/oder der Fussauflage beabstandet und um die erste Drehachse drehbar ausgebildet. Es steht mit der ersten Drehachse in Kontakt, wobei das Lager vorzugsweise nicht entlang der ersten Drehachse verschiebbar ausgestaltet ist. Bevorzugt ist die Basis und/oder die Fussauflage in diesem Beispiel von der ersten Drehachse bzw. der Pedalachse beabstandet und/oder die Basis steht nicht in direktem Kontakt mit der ersten Drehachse oder sie ist nicht direkt auf diese abgestützt (sondern über die oben genannten Elemente). Bei dieser Ausgestaltungsvariante ist es bevorzugt, wenn sich die elastisch verformbaren Elemente bzw. die Federelemente oder die Dämpfungselemente auf das mit der Pedalachse in Verbindung stehende Lager abstützen. Die Pedalbasis ist vorzugsweise mit dem Lager oder den Lagern tragend verbunden und allseitig frei beweglich. Die Bewegung der Basis entlang der Pedalachse ist in diesem Fall also nicht notwendigerweise linear. Diese Beweglichkeit wird durch den Abstand des Inneren der Basis zur Pedalachse realisiert.

Offenbart sei eine elastische bzw. bewegliche Aufhängung der Basis einerseits an translatorisch fixen Lagern jeweils an den beiden äußeren Seiten der Pedalachse und andererseits jeweils rechts und links an der Basis, derart, dass die Pedalachse keinen Kontakt bzw. einen Abstand zur Basis hat. Die Vorteile einer solchen Anordnung sind: Infolge der an den Lagern (z.B. gekapselte Lager) aufgehängten Basis, besteht keine Verschmutzungsgefahr für die seitlichen Lager, wie dies bei einer Ausführung mit Gteitiagern der Fall ist. Zudem führt der Abstand zwischen der Basis des Pedals und der Pedalachse zu einer allseitigen elastischen Beweglichkeit und ermöglicht insbesondere eine Verkippung der Basis. Diese kann z.B. auch wiederum durch ein Bauteil oder eine Ausführung der Basis mit elastischen Elementen aus Polymeren realisiert werden.

Somit sei unter anderem ein Pedal offenbart dass sich dadurch auszeichnet,
- dass die Basis und die Fussauflage über ein oder mehrere elastisch verformbare Elemente miteinander verbunden sind, wobei die elastisch verformbaren Elemente eine Drehung der Fussauflage relativ zur Basis um die zweite und/oder dritte Drehachse erlauben, oder
- dass die Basis und/oder die Fussauflage über ein oder mehrere elastisch verformbare Elemente mit der ersten Drehachse (insbesondere der Pedalachse) verbunden sind, wobei die elastisch verformbaren Elemente eine Drehung der Fussauflage und/oder der Basis relativ zur ersten Drehachse (insbesondere zur Pedalachse) um die zweite und/oder dritte Drehachse erlauben, oder
- dass die Fussauflage (vorzugsweise auf der Oberseite) ein oder mehrere elastisch verformbare Elemente (welche fest oder lösbar mit der Fussauflage verbunden sein können) aufweist, wobei die elastisch verformbaren Elemente eine Drehung des Fusses relativ zur Fussauflage oder zur Basis um die zweite und/oder dritte Drehachse erlauben und
- wobei die elastisch verformbaren Elemente vorzugsweise eine Drehung um die zweite und die dritte Drehachse und/oder eine allseitige Verwringung der Fussauflage oder des Fusses erlauben.

Es sei angemerkt, dass das erfindungsgemässe Pedal nicht nur für Trainingsgeräte, Rehabilitationsgeräte oder Sportgeräte geeignet ist, bei denen die kreisrunde Fahrrad-Bewegung abläuft, sondern auch für solche, die ein anderes Bewegungsmuster definieren. Das Pedal kann beispielsweise auf einem separaten Gerät wie einem Ski angebracht sein und /oder auf einem beweglichen Teil oder einem Unterbau eines Geräts (z.B. Schuhauflage einer Ruderbank, eines Steppers, eines Crosstrainers etc.). Allgemein kann der Mechanismus, der die Verschiebung entlang der ersten Drehachse erlaubt (insbesondere die Pedalachse oder die Führungsschienen) auf einer oder zwei einander gegenüberliegenden Seiten mit einem beweglichen Teil eines Trainingsgeräts verbunden sein. Mit dem beweglichen Teil ist vorzugsweise ein Teil gemeint, der dazu ausgebildet ist, während des Trainingsvorgangs mit einem Arm oder einem Bein eines Benutzers zusammenzuwirken bzw. durch diesen bewegt zu werden.

Entsprechend seien allgemein auch Therapie-, Trainings- und Sportgeräte mit einem erfindungsgemässen Pedal bzw. einer beschriebenen Pedalvariante offenbart. Insbesondere ist dies ein Gerät, welches durch Beugen und Strecken der Beine und/oder Arme bedient und/oder angetrieben wird und ein Pedal wie es beschrieben wurde aufweist, wobei es sich beim Gerät vorzugsweise um ein Therapiegerät, Rehabilitationsgerät, Fitnessgerät oder Fortbewegungsmittel und insbesondere um ein Fahrrad oder einen Ergometer handelt.

Da auch Geräte, die mit den Händen oder Armen bedient werden, Gegenstand der vorliegenden Erfindung sind, seien bei Erwähnung des Wortes "Fussauflage" jeweils eine Fussauflage (in der normalen Bedeutung des Wortes) und alternativ auch eine Handauflage oder ein Handgriff offenbart, soweit dies im Zusammenhang mit der jeweiligen Ausführungsvariante (vgl. beschriebene Varianten) sinnvoll ist.

Zudem sei die Verwendung eines Pedals (bzw. einer Pedalvariante wie sie in diesem Dokument beschrieben ist) zur Behandlung, insbesondere zur Therapie offenbart. Vorzugsweise handelt es sich dabei um die Therapie von chirurgischen und/oder orthopädischen Krankheitsbildern, insbesondere um die Therapie von neurologischen und/oder neuromuskulären Krankheitsbildern bzw. Krankheiten.

Die gerätetechnischen Anforderungen, die eine besonders effiziente Ausführung dieser Therapien erlauben, bestehen einerseits in voneinander isolierbaren bzw. vereinzelbaren Bewegungen und anderseits in komplexen ("kombinierten") Bewegungen. Durch diese umfangreiche Variabilität kann mit geringerer Geräteanzahl bzw. mit nur einem Gerät analog des axial beweglichen Pedals individuell befundgerecht therapiert werden.

Unter anderem sind somit offenbart:
[-1-] Ein Pedal mit einer ersten Drehachse, einer Basis, und einer Fussauflage, dadurch gekennzeichnet, dass
   - die Basis und die Fussauflage um die erste Drehachse drehbar und entlang der ersten Drehachse verschiebbar sind und
   - die Fussauflage vorzugsweise um eine zweite Drehachse drehbar mit der Basis verbunden ist, wobei
   - die zweite Drehachse quer zur ersten Drehachse angeordnet ist und
   - die zweite Drehachse zusammen mit der Basis entlang der ersten Drehachse verschiebbar ist.
[-2-] Ein Pedal nach Punkt [-1-], dadurch gekennzeichnet, dass
   - die Konstruktion des Pedals ein freies Zusammenspiel zwischen der Drehung der Basis um die erste Drehachse, der Verschiebung der Basis entlang der ersten Drehachse und der Drehung der Fussauflage um die zweite Drehachse erlaubt,
   - die Verschiebung der Basis entlang der ersten Drehachse in eine oder beide Verschiebungsrichtungen gefedert und/oder gedämpft ist,
   - die Drehung der Fussauflage um die zweite Drehachse in eine oder beide Drehrichtungen gefedert und/oder gedämpft ist, und
   - die zweite Drehachse in Fahrtrichtung hinter, vor, oder über der ersten Drehachse angeordnet ist und
   - die Fussauflage sich von der zweiten Drehachse (15) über die erste Drehachse erstreckt.
[-3-] Ein Pedal nach Punkt [-1-], dadurch gekennzeichnet, dass die Konstruktion des Pedals ein freies Zusammenspiel zwischen der Drehung der Basis um die erste Drehachse, der Verschiebung der Basis entlang der ersten Drehachse und der Drehung der Fussauflage um die zweite Drehachse erlaubt.
[-4-] Ein Pedal nach einem der Punkte [-1-] oder [-3-], dadurch gekennzeichnet, dass die Verschiebung der Basis entlang der ersten Drehachse in eine oder beide Verschiebungsrichtungen gefedert und/oder gedämpft ist.
[-5-] Ein Pedal nach einem der Punkt [-1-] oder [-3-] bis [-4-], dadurch gekennzeichnet, dass die Drehung der Fussauflage um die zweite Drehachse in eine oder beide Drehrichtungen gefedert und/oder gedämpft ist.
[-6-] Ein Pedal nach Punkt [-4-] oder [-5-], dadurch gekennzeichnet, dass die Federung und/oder Dämpfung durch elastisch verformbare Elemente aus Polymer, insbesondere Kautschuk, erreicht wird.
[-7-] Ein Pedal nach einem der Punkte [-1-] oder [-3-] bis [-6-], dadurch gekennzeichnet, dass die zweite Drehachse in Fahrtrichtung hinter oder vor der ersten Drehachse angeordnet ist und sich die Fussauflage von der zweiten Drehachse über die erste Drehachse erstreckt oder die zweite Drehachse von oben nach unten durch die Fussauflage verläuft und die erste Drehachse schneidet.
[-8-] Ein Pedal nach einem der Punkte [-1-] bis [-7-], dadurch gekennzeichnet, dass die Fussauflage um eine dritte Drehachse drehbar mit der Basis verbunden ist, wobei die dritte Drehachse quer zur ersten Drehachse und quer zur zweiten Drehachse angeordnet ist und wobei die Drehung um die dritte Drehachse vorzugsweise in eine oder beide Drehrichtungen gefedert und/oder gedämpft ist.
[-9-] Ein Pedal nach einem der Punkte [-1-] bis [-8-], dadurch gekennzeichnet, dass die erste Drehachse durch eine Pedalachse gebildet ist und dass es sich bei der Pedalachse um eine teleskopierbare Achse handelt.
[-10-] Ein Gerät mit einem Pedal nach einem der Punkte [-1-] bis [-9-], insbesondere Therapiegerät, Trainingsgerät, Rehabilitationsgerät oder Sportgerät.

### Kurze Beschreibung der Zeichnungen

Es zeigen in schematischer, nicht massstabsgetreuer Darstellung:
- Fig. 1: eine bevorzugte Ausführungsform eines erfindungsgemässen (rechten) Pedals in perspektivischer Darstellung;
- Fig. 2: eine Untersicht des Pedals aus Fig.1;
- Fig. 3: eine Seitenansicht des Pedals aus Fig.1;
- Fig. 4: eine weitere Ausgestaltungsvariante eines erfindungsgemässen (linken) Pedals in Seitenansicht;
- Fig. 5: eine zweite Seitenansicht des Pedals aus Fig.4;
- Fig. 6: eine Schnittdarstellung eines Pedals mit teleskopierbarer Pedalachse;
- Fig. 7: eine Ausführungsform des Pedales, aufgesetzt auf ein anderes Gerät;
- Fig. 8: eine Darstellung der Bewegungsachsen der Hüfte;
- Fig. 9: eine vereinfachte Darstellung der Bein- bzw. Hüftbewegung beim Abspreizen und Anziehen (Abduktion/ Adduktion in der Hüfte);
- Fig.10: eine vereinfachte Darstellung der Bewegungsachsen von Knie und Fuss;
- Fig.11: eine vereinfachte Darstellung der positionsabhängigen kinematischen Zusammenhänge zwischen Tretkurbelarm, Pedal und Fussauflage in der Ansicht von vom, entgegen der Fahrtrichtung;
- Fig.12: eine vereinfachte Darstellung der virtuellen Drehachse im Fersenbereich in der Draufsicht;
- Fig.13 a/b: eine Darstellung eines vereinfachten Pedals ohne zweite Drehachse;
- Fig.14: eine Darstellung eines vereinfachten Pedals mit Blattfedern als Federelemente;
- Fig.15: ein Pedal mit konkaver Fussauftrittsfläche;
- Fig. 16 a-c: verschiedene Darstellungen eines vereinfachten Pedals mit außenliegenden Lagern die die gesamte Basis tragen.

### Ausführung der Erfindung

Die Erfindung wird nachfolgend anhand der Zeichnungen beispielhaft erläutert.

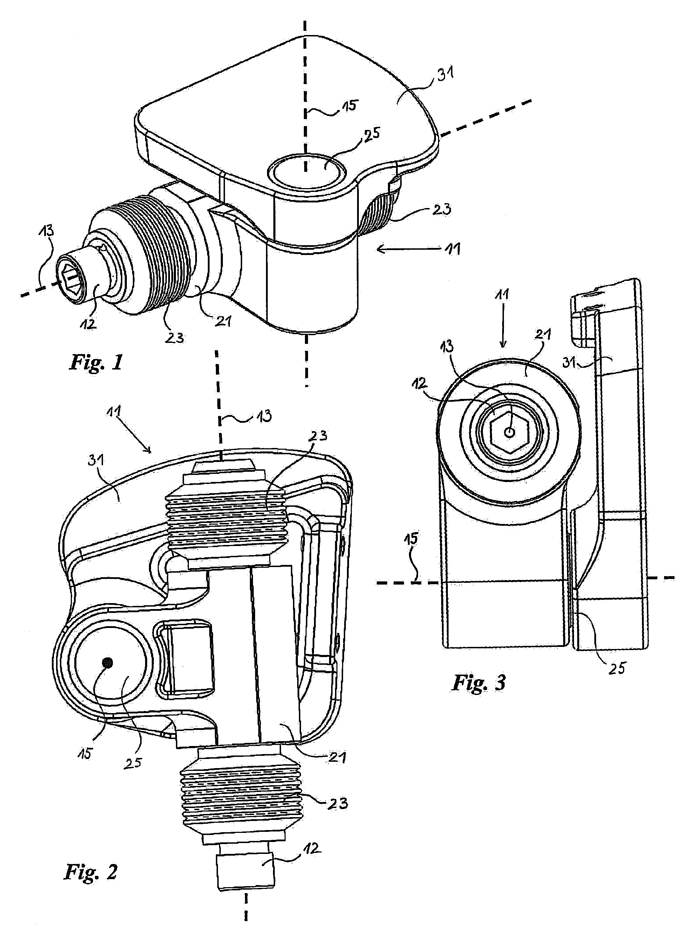

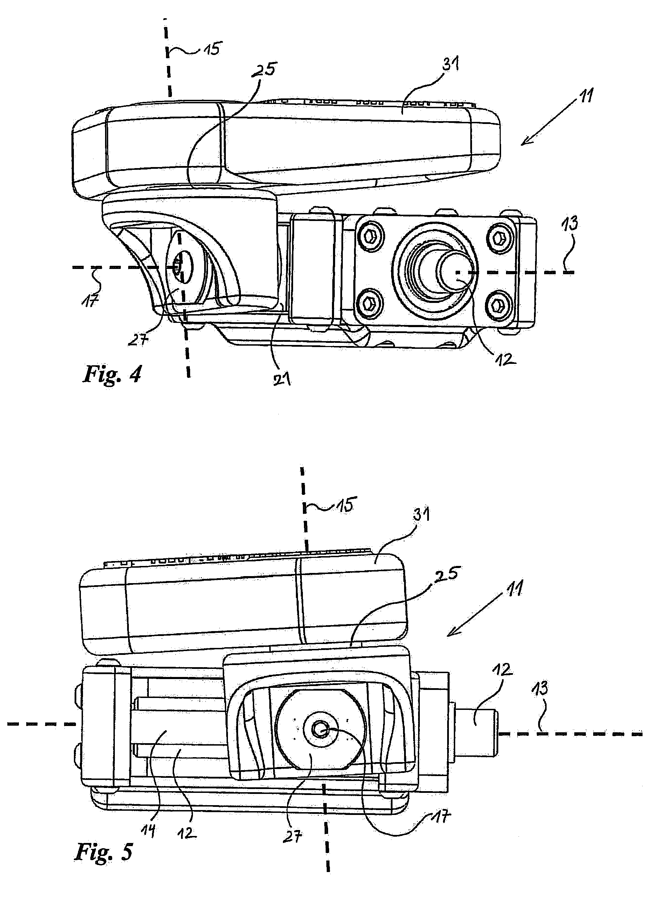

Die Fig. 1 bis 3 zeigen eine Variante des erfindungsgemässen Pedals in perspektivischer Darstellung, sowie eine Untersicht und eine Seitenansicht desselben. Das Pedal 11 kann an einem (nicht gezeigten) Tretkurbelarm eines Fahrrads, Trainings- oder Rehabilitationsgeräts befestigt werden. Es ist relativ zum Tretkurbelarm um die (erste) Drehachse 13 drehbar. Diese Drehbarkeit kann durch eine drehbare Verbindung zwischen der Pedalachse 12 und dem Tretkurbelarm erzielt werden. Die Pedalachse 12 kann jedoch auch drehfest mit dem Tretkurbelarm verbunden sein. In diesem Fall besteht die Möglichkeit, die Pedalachse 12 und die Basis 21 drehbar miteinander zu verbinden. Die Basis 21 stellt die Verbindung zwischen der Fussauflage 31 und der Pedalachse 12 bzw. demjenigen Teil des Pedals dar, der die Drehung um die erste Drehachse 13 ermöglicht. Dadurch ist eine in Fuss, Knie und Hüfte ausgeführte Beugung und Streckung (Flexion/Extension; d.h. Drehbewegungen um Achsen, die etwa parallel zur ersten Drehachse 13 ausgerichtet sind) ermöglicht. Die Basis 21 ist im vorliegenden Beispiel mit der Pedalachse 12 verbunden und vorzugsweise frei um diese drehbar. Ausserdem ist sie parallel zur Pedalachse 12 verschiebbar. Zu diesem Zweck kann die Basis 21 direkt mit der Pedalachse 12 verbunden sein, d.h. eine Aufnahme für die Pedalachse 12 bilden. In diesem Fall kann die Pedalachse 12 eine - oder die einzige - Führung für die Basis 21 bilden und das Gewicht des Fahrers aufnehmen. Es besteht jedoch auch die Möglichkeit, entlang der Pedalachse 12 bzw. entlang der ersten Drehachse 13 (insbesondere in Fahrtrichtung hinter und/oder vor der Pedalachse 12 bzw. der Drehachse 13) Führungsschienen 14 (vgl. Fig.4 und 5) vorzusehen, auf denen die Basis 21 entlang der Pedalachse 12 bzw. der Drehachse 13 verschoben werden kann und die das Gewicht des Fahrers aufnehmen. Die Verschiebung der Basis 21 entlang der Pedalachse 12 kann, wie gezeigt, gefedert und/oder gedämpft sein und zwar mit Vorteil in beide Bewegungsrichtungen. Dies wird durch Federelemente 23 ermöglicht, bei denen es sich im vorliegenden Fall um Tonnenfedem handelt, die beidseitig der Basis 21 angeordnet und jeweils von einem Faltenbalg geschützt sein können .Die Verbindung zwischen Basis 21 und Fussauflage 31 wird durch ein Gelenk 25 hergestellt, welches eine Drehung um die (zweite) Drehachse 15 erlaubt. Das Gelenk 25 ist im vorliegenden Fall als (vorzugsweise längsstabiles) Feder-bzw. Dämpfungselement ausgebildet, welches zwei Anschläge aufweist, die die Drehung in beide Drehrichtungen und damit den Drehwinkel beschränken. Die Drehachse 15 ist (im Wesentlichen) rechtwinklig zur Pedalachse 12 und in Fahrtrichtung hinter dieser angeordnet. Damit wird eine Bewegung der Fussauflage 31 in einer zur Pedalachse 12 (im Wesentlichen) parallelen Ebene ermöglicht.

Das Gelenk 25 kann in einer bevorzugten Variante als eigenständiges Bauteil respektive Bauteile teilweise aus elastischem Material bzw. Verbundmaterialien ausgebildet sein (nicht in der Fig. dargestellt). Es kann bevorzugt als mindestens ein Formelement (z.B. tellerförmig) oder aus mehreren Elementen (z.B. in zylindrischer Form) zwischen Basis und Fussauflage kraftschlüssig eingebunden sein und - bevorzugt torsionselastisch - Basis und Fussauflage verbinden.

Anwender- bzw. Therapie-bedarfsgerecht können die in diesem Dokument beschriebenen elastisch verformbaren Elemente, insbesondere elastomere Bauteile, mit Vorteil in verschiedenen Härtegraden (shore-Härten) ausgeführt sein. Eine bevorzugte Ausführungsform hat mindestens eine shore-Härte von 25, 35, 45 oder 50 und/oder höchstens eine shore-Härte von 75, 80 oder 85.

Eine bevorzugte Ausführung der im Wesentlichen senkrecht zur ersten Drehachse möglichen Rotation bzw. Verwringungen (insbesondere einer Drehung um die zweite und/oder dritte Drehachse) erfolgt gegen eine Kraft (z.B. resultierend aus der shore-Härte) die mindestens 1, 2 oder 3 Nm und / oder höchstens 5, 6 oder 7 Nm beträgt. Solche Werte sind nicht nur für die in Fig.1-3 gezeigte Variante sondern auch für andere beschriebene Pedalvarianten bevorzugt.

Kraftschlüssige Verbindungen zwischen Elastomeren und Metall bzw. Elastomeren mit anderen Kunststoffen sind Stand der Technik wie z.B. das Vulkanisieren, Ultraschall-Verschweißen oder Verkleben. Formschlüssige oder kraftschlüssige Verbindungen zwischen Elastomeren und anderen Kunststoffen oder Metall lassen sich z.B. durch Steckverbindungen, die auch verklebbar sein können, kostengünstig und allenfalls austauschbar herstellen. Vorteil dieser konstruktiv - technologischen Ausführung ist deren einfache und kostengünstige Fertigung, was unter anderem durch den möglichen Verzicht auf ein separates Bauteil vor oder hinter der Pedalachse bedingt ist.

Durch die Verschiebbarkeit der Basis 21 entlang der Pedalachse 12, d.h. zum Tretkurbelarm hin und von diesem weg, erlaubt die Konstruktion ein Abspreizen und Anziehen (Abduktion/Adduktion) des Oberschenkels relativ zum Becken bzw. zur gegenüberliegenden Beinseite, sowie des Oberschenkels, des Unterschenkels und des Fußes relativ zum Becken. Weiterhin wird eine Winkelveränderung des Unterschenkels relativ zum Oberschenkel (Varisierung / Valgisierung) und darüber hinaus eine aktive Verkippung des Fußes (Supination / Pronation) begleitet von einer Rotation zwischen Ober- und Unterschenkel (tibio-femorale Rotation) ermöglicht. Diese Bewegungen können bei verriegelter (steifer) Haltung der Fussgelenke und des Kniegelenks als eine Bewegung des Beines betrachtet werden, die über eine Drehung um eine im Hüftgelenk situierte sagittale Achse zz' (vgl. Fig. 8 und 9) erfolgt. Sie würden beim gestreckten Bein als Adduktions- bzw. Abduktionsbewegung bezeichnet, schliessen jedoch die oben genannten Bewegungen mit ein und bilden so ein komplexes Bewegungsmuster.

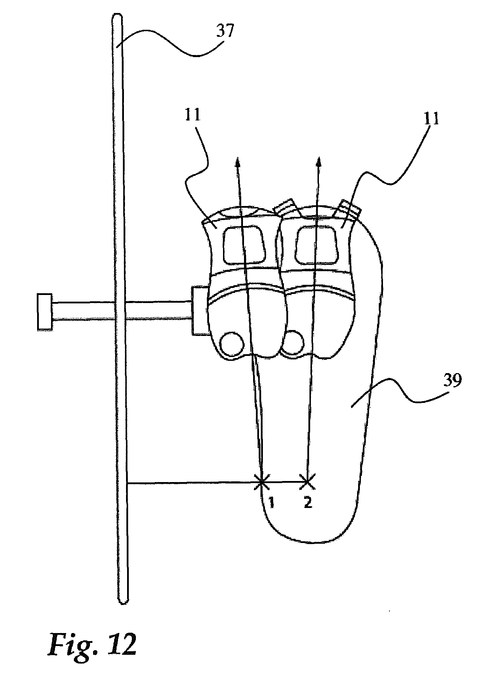

Das nachfolgende Ausführungsbeispiel (Fig.4 und 5) fügt diesem Zusammenspiel der jeweiligen Beingelenke noch die Möglichkeit einer weiter verbesserten, nur vom Fuss ausgeführten Auf und Abkantbewegung (Supination/Pronation) hinzu. Dies insbesondere dann, wenn Schuh und Pedal kraftschlüssig z.B. durch Click-Systeme miteinander verbunden sind. Ermöglicht wird dies durch eine (dritte) Drehachse 17 (vgl. unten). Durch die Drehbarkeit um die (etwa vertikale) zweite Drehachse 15 können in Fuss, Knie und Hüfte ausführbare Drehungen nach innen und nach aussen (Innenrotation/Außenrotation) erfolgen. Aus dem möglichen Zusammenwirken der Verschiebbarkeit der Basis 21 entlang der Pedalachse 12 mit der Drehbarkeit um die zweite (etwa) vertikale Drehachse 15 können in Fuss, Knie und/oder Hüfte ausführbare Drehungen nach innen bzw. nach aussen (Innenrotation /Aussenrotation) derart erfolgen, dass - bei horizontal hin und her schwingendem Vorfuss - eine virtuelle, vertikale Drehachse im Fersenbereich des Fußes resultiert. Diese kann mit Auf- bzw. Abkanten des Fußes (Supination /Pronation bzw. Inversion / Eversion), der Winkelveränderung zwischen Oberschenkel und Knie (Varisierung / Valgisierung) und dem Anziehen bzw. Abspreizen des Oberschenkels (Adduktion/ Abduktion) mitwandem. Die bei üblichen Pedalen bekannten Beuge-Streckbewegungen des Fusses respektive des Beines können somit kombiniert ausgeführt werden mit Innen-Aussenrotation sowie mit Varisierung/Valgiserung sowie Abduktion-Adduktion und zwar mit physiologischen, weil biomechanisch richtigen Achslagen und Achsbewegungen. Siehe Fig.12.

Fig. 4 und 5 zeigen eine alternative Ausführungsvariante, bei der die Basis 21 über zwei Gelenke 25 und 27 mit der Fussauflage 31 verbunden ist. Die Gelenke 25,27 ermöglichen einerseits eine Drehung um die zweite Drehachse 15 wie oben beschrieben und andererseits eine Drehung um eine dritte Drehachse 17, welche (im Wesentlichen) rechtwinklig zur Pedalachse 12 und (im Wesentlichen) rechtwinklig zur zweiten Drehachse 15 ausgerichtet ist. Die genannte dritte Drehachse 17 bzw. das die Drehachse 17 definierende Gelenk 27 ermöglicht zusätzlich eine Auf- und Abkantbewegung des Fusses nach innen und aussen, d.h. eine Drehung um die Längsachse des Fusses (Supination/Pronation). Die Drehung um die dritte Drehachse 17 ist mit Vorteil ebenfalls in beide Drehrichtungen durch einen Anschlag beschränkt, so dass die Fussauflage 31 nicht mit der Pedalachse 12 und/oder der Basis 21 in Berührung kommt. Ausserdem ist es von Vorteil, wenn die Drehung um die dritte Drehachse 17 ebenfalls gefedert und/oder gedämpft ist. Die Gelenke 25,27 für die Drehung um die zweite Drehachse 15 und um die dritte Drehachse 17 können als elastische Elemente ausgebildet sein bzw. elastische Elemente enthalten, was eine sehr leichte Konstruktion des Pedals ermöglicht. Die Elemente können aus Kunststoff oder auch aus natürlichen elastischen Materialien gefertigt sein. Im Unterschied zum Pedal 11 aus den Fig. 1 bis 3 ist die Ausführungsform aus Fig. 4 und 5 mit einer oder zwei zusätzlichen Führungsschienen 14 versehen, die (im Wesentlichen) parallel zur ersten Drehachse 13 bzw. zur Pedalachse 12 ausgerichtet sind. Dadurch kann das Gewicht des Fahrers besser aufgenommen werden. Die Führungsschienen 14 können jeweils an ihren Enden (direkt oder indirekt) mit der Pedalachse 12 (drehbar oder drehfest) verbunden sein, falls eine solche Pedalachse 12 wie im gezeigten Beispiel vorgesehen ist.

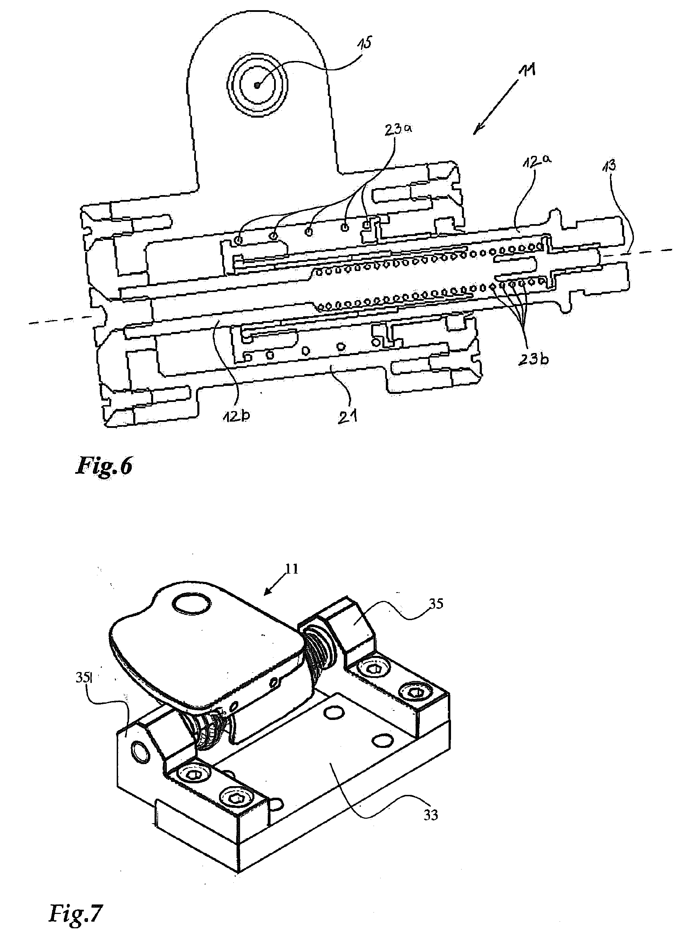

Fig. 6 stellt eine Schnittdarstellung eines Pedals mit teleskopierbarer Pedalachse in Form einer Doppelachse dar. Zur Federung der Verschiebebewegung entlang der ersten Drehachse 13 wird hier eine aus einem äusseren und einem inneren Teil 12a und 12b gebildete Pedalachse eingesetzt. Die Teile 12a und 12b sind vorzugsweise zylindrisch, insbesondere kreiszylindrisch. Die Basis 21 bildet eine Aufnahme für den äusseren Teil 12a der Pedalachse, wobei ein Teil der Aufnahme einen Innendurchmesser aufweist, der dem Aussendurchmesser des äusseren Teils 12a der Pedalachse entspricht. Ein weiterer Teil der Aufnahme weist einen Innendurchmesser auf, der grösser als der genannte Aussendurchmesser des äusseren Teils der Pedalachse 12a ist, wodurch ein Freiraum gebildet wird, in den ein Federelement 23a aufgenommen ist. Der äussere Teil der Pedalachse 12a ist hohl, und in diesen aufgenommen ist ein innerer Teil der Pedalachse 12b. Die beiden Pedalachsenteile 12a und 12b fluchten, wobei der innere Teil 12b in den äussern Teil 12a hineingleiten kann. Das Hineingleiten ist durch ein Federelement 23b, welches ebenfalls in den äusseren Teil 12a der Pedalachse aufgenommen ist, gefedert bzw. gedämpft. Bei den Federelementen 23a und 23b handelt es sich hier um Schraubenfedern. Diese Ausgestaltungsform ist besonders platzsparend. Es sind auch andere Ausführungsvarianten desselben Konstruktionsprinzips denkbar. Von Interesse sind allgemein Pedale, die eine längenveränderliche oder teleskopierbare Pedalachse aufweisen und/oder Pedale mit einer Pedalachse, die zwei ineinandergleitende (vorzugsweise zylindrische) Teile aufweist. Weiterhin von Interesse sind Pedale, die zwei aneinander vorbei bewegbare Federelemente aufweisen. In letzterem Fall ist das eine Federelement vorzugsweise durch das andere Federelement hindurchbewegbar oder in das andere Federelement hineinbewegbar und/oder es ist ganz oder teilweise im anderen Federelement angeordnet.

Fig.7 zeigt eine alternative Anbindung eines Pedals 11 für andere Geräte als Fahrräder. Das Pedal 11 ist im gezeigten Beispiel auf einem Sockel 33 montiert, der an bzw. auf einem Gerät angebracht oder durch das Gerät gebildet sein kann. Dieser weist ein oder zwei Gelenke 35 zur (um die erste Drehachse) drehbaren Verbindung mit dem Pedal 11 bzw. der Pedal-Basis auf. Bei Vorhandensein einer Pedalachse kann es sich bei den Gelenken 35 um einfache Achsenaufnahmen für die Pedalachse handeln. Eine solche Konstruktion kann beispielsweise genutzt werden, um die Funktionalität des Pedals auch mit anderen Geräten als Fahrrädern zu verbinden bzw. auf diese zu übertragen.

Fig. 8 zeigt vereinfacht die Bewegungsachsen des Hüftgelenks. Um die Achse xx' erfolgen Beugung und Streckung des Beines in der Hüfte, um die Achse yy' erfolgen Innen- und Aussendrehung des Beines in der Hüfte und um die Achse zz' erfolgen Abspreizen und Anziehen des Beines in der Hüfte. Die gestrichelte Linie von O nach R markiert die Längsachse des Beines mit dem Drehzentrum O.

Fig. 9 zeigt - unter Bezugnahme auf die Achsenbezeichnung aus Fig.8 - die Bewegungsausführung um die Achse zz' des Beines in der Hüfte. Die schwach gestrichelte Linie markiert die Längsachse des Beines; die stärker gestrichelte Linie zeigt die Längsachse des Oberschenkels. In der Darstellung steht das Bein in abgespreizter Ausgangsposition (nach außen). Der Pfeil zeigt auf die Endposition des Beines nachdem es angezogen wurde (nach innen). Diese Abbildung zeigt besonders deutlich die innovative Bewegungsfunktion des Pedals bezogen auf die natürliche Hüftbewegung des Menschen. Der Fuss kann dabei zum einen die Bewegung in der Hüfte in der Achse zz' ausführen bzw. ihr folgen, zum anderen kann der Fuss in jeder Hüftposition alle eigenen Bewegungen ausführen: Die Beugung und Streckung des Fusses um die Achse xx', die Innen - und Aussendrehung um die Achse yy' sowie die dem Fuss eigenen Bewegungen um die Achse zz', die Aufkantbewegung (Heben des inneren Fussrandes nach oben) und die Abkantbewegung (Senken des inneren Fussrandes durch Heben des äußeren Fussrandes nach oben). Diese Bewegungsspiel im Fuss um die Achse zz' wird auch als Supination -Pronation bezeichnet.

Fig.10 zeigt vereinfacht die Bewegungsachsen des Knie- und des Fussgelenks. Um die Achsen xx' erfolgen Beugung und Streckung des Knies und des Fusses. Um die Achse yy' erfolgen Innen- und Aussendrehung des Knies und des Fusses.

Für das Knie erfolgt um die Achse zz' ein geringfügiges, aber biomechanisch sinnvolles Abspreizen des Unterschenkels relativ zum Oberschenkel und ein Anziehen des Unterschenkels relativ zum Oberschenkel. Dieser funktionelle Bewegungsmodus im Knie um die Achse zz', der naturgemäss an das Beugen und Strecken um die Achse xx' in Hüfte und Knie gekoppelt ist, wird auch als Valgisierung - Varisierung bezeichnet.

Für den Fuss erfolgt um die Achse zz' die bereits oben geschilderte Supination-Pronationsbewegung. Zur Vereinfachung der Darstellung der Bewegungsachsen des Fusses, der anatomisch aus 2 Gelenken besteht; dem oberen Sprunggelenk, das die Achse xx' realisiert und dem unteren Sprunggefenk, das die Achse zz' realisiert, sind die anatomisch gelenkmässig getrennten Achsen xx' und zz' hier- zeichnerisch vereinfacht - in einem Gelenk dargestellt. Auch der anatomisch korrekte Verlauf der Achse zz' des Fusses, der anatomisch schräg verläuft (für den rechten Fuss; von oben innen nach unten aussen verläuft), ist zur Vereinfachung zeichnerisch gerade im Längsverlauf des Fusses dargestellt.

Fig.11 zeigt vereinfacht das Zusammenspiel von Beinstellung und Pedalposition beim Einsatz des (rechten) Pedals 11 in einer Ansicht von vom entgegen der Fahrtrichtung.

In der oberen Bildreihe links wird gezeigt, dass das Pedal 11 nach innen positioniert ist, also zum Tretkurbelarm 37 hin, wenn sich der Tretkurbelarm 37 in einer oberen Stellung befindet. In der oberen Bildreihe rechts wird gezeigt, dass diese Pedalposition einer Stellung entspricht, bei der Hüfte und Knie gebeugt und angezogen sind. (Die einwärts gedrehte Stellung von Hüfte und Knie in dieser Position ist nicht sichtbar). Diese Pedalposition entspricht einer Stellung, bei der der Fuss angezogen ist. (Die Aufkant-Position des inneren Fussrandes (Supination) in dieser Position, ist nicht dargestellt).

In der unteren Bildreihe links wird gezeigt, dass das Pedal 11 nach aussen positioniert ist, also vom Tretkurbelarm 37 weg, wenn sich der Tretkurbelarm 37 in einer unteren Stellung befindet. In der unteren Bildreihe rechts wird gezeigt, dass diese Pedalposition einer Stellung, entspricht bei der Hüfte und Knie gestreckt und abgespreizt sind. (Die auswärts gedrehte Stellung von Hüfte und Knie in dieser Position, ist nicht sichtbar). Diese Pedalposition entspricht einer Stellung, bei der der Fuss abgespreizt ist. (Die Abkant-Position des inneren Fussrandes (Pronation) in dieser Position, ist nicht dargestellt).

Fig.12 zeigt ein (rechtes) Pedal 11 in zwei verschiedenen Positionen, wobei in der einen Position ein auf das Pedal 11 aufgesetzter Fuss 39 gezeichnet ist. Die Abbildung stellt eine Ansicht von oben dar und markiert in Form von Pfeilen die Fusslängsachse in den beiden genannten Positionen. Beispielhaft sind die virtuellen Drehachsen x1 und x2 in Draufsicht gezeichnet, die der anatomischen Beinachse yy' (vgl. Fig.8) entsprechen und die funktionell im Fersenbereich des Fusses eines Pedalnutzers resultieren, ohne als technische Hardware vorhanden zu sein. Mit der Fussauflage verschiebt sich auch die Lage der virtuellen Drehachse entlang einer frontalen Achse in der Frontalebene. Dies ist das Resultat einer kombinierten Bewegung, die sich aus einer Drehbewegung des Beines um die Achse yy' (Einwärts-Auswärtsdrehen; ermöglicht durch ein Drehung der Fussauflage um die zweite Drehachse) und einer Bewegung des Beines um die Achse zz' (Anziehen -Abspreizen; ermöglicht durch die Verschiebung der Fussauflage respektive der zweiten Drehachse entlang der ersten Drehachse) zusammensetzt. Die virtuelle Drehachse verändert ihre Lage also abhängig von der jeweiligen Pedalposition in verschiedene Sagittalebenen hinein. Ausgelöst durch kombinierte Bewegungen in den beteiligten Gelenken, die das Pedal in eine biomechanisch bedarfsgerechte Position bringen, wandert sie mit. Daraus resultiert ein sich abhängig von der Pedalposition ändernder Abstand der virtuellen Drehachsen x1 bzw. x2 zum Tretkurbelarm 37. Die Fusslängsachse, dargestellt als Pfeil 1 bzw. Pfeil 2, verändert ihren Abstand zum Tretkurbelarm 37 dementsprechend analog. Die Darstellung zeigt, dass die eine Fusslängsachse (Pfeil 1) und deren virtuelle Drehachse x1 näher am Tretkurbelarm 37 liegen, als die andere Fusslängsachse (Pfeil 2) und deren virtuelle Drehachse x2. Die Position von Pfeil 1 entspricht dabei der Pedal-Fuss- Position (oben, innen) bei gebeugtem Bein, also bei nach oben zeigendem Tretkurbelarm 37 (vgl. Fig.11). Die Position von Pfeil 2 entspricht der Pedal-Fuss- Position (unten, außen) bei gestrecktem Bein, also bei nach unten zeigendem Tretkurbelarm.

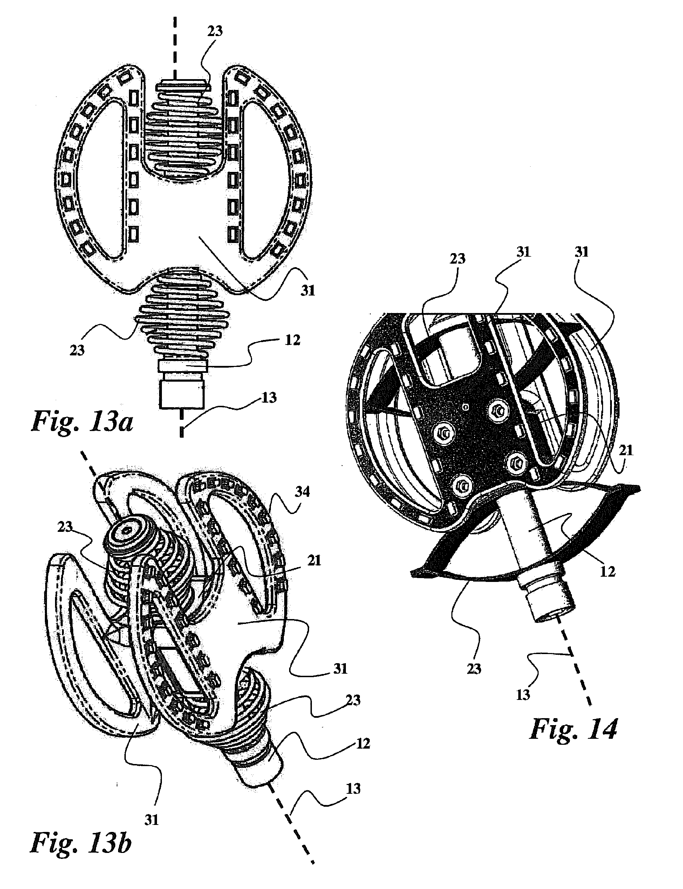

Fig. 13a und 13b zeigen eine vereinfachte und damit kostengünstigere Ausgestaltungsvariante eines Pedals. Das Pedal weist eine Fussauflage 31 auf, die zur Gewichtsreduktion mit Ausnehmungen versehen ist und zur besseren Griffigkeit eines Schuhs an der Oberfläche mit einer Vielzahl von Erhebungen 34 ausgestattet ist. Die Fussauflage 31 ist mit der Basis 21 verbunden. Dies kann durch (nicht dargestellte) Schrauben bewerkstelligt werden. Die Schrauben können jedoch auch durch Stifte aus elastischem Material ersetzt sein, wodurch eine geringfügige Drehung der Fussauflage 31 um eine zweite Drehachse möglich wird (diese steht vorzugsweise im Wesentlichen senkrecht auf der Fussauflage 31). Die Basis 21 ist entlang der Pedalachse 12 verschiebbar ausgebildet und um diese drehbar gelagert (erste Drehachse 13). Die Basis 21 ruht auf der Pedalachse 12 bzw. ist über ein Lager direkt mit dieser verbunden. Die Verschiebung der Basis 21 entlang der Pedalachse 12 ist beidseitig durch Federelemente 23, in diesem Fall tonnenförmige Schraubenfedern, gefedert.

Die Fig.14 zeigt eine Ausführungsform mit speziellen Federelementen 23 in Form von Blattfedern. Diese können aus Metall, für eine besonders leichte Pedalvariante aber auch aus Kunststoff gefertigt sein.

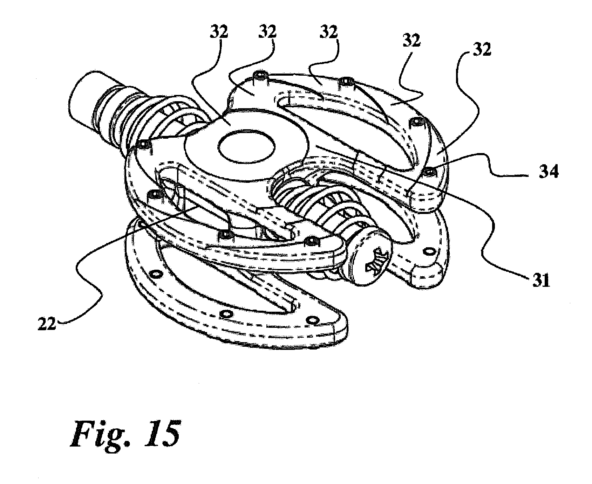

Fig.15 stellt eine Pedalvariante mit konkaver Fussauflage 31 dar. Die Fussauftrittsfläche weist eine Mehrzahl von Stufen 32 auf, deren Rand hier jeweils kreisförmig ausgebildet ist. Die Stufen 32 schneiden den äusseren Rand der Fussauflage 31, wodurch der Rand selbst eine gestufte Form annimmt (verbesserte Rutschfestigkeit). Der Übergang zwischen den Stufen 32 (bzw. die im Wesentlichen in zur Fussauflagefläche parallelen Ebenen liegenden Kanten der Stufen) trägt insbesondere dann, wenn er eckig und/oder nicht gerundet oder mit einer Fase versehen ist, zu einer verbesserten Rutschfestigkeit bei. Mehrere der Stufen 32 sind mit Erhebungen 34 versehen, die die Rutschfestigkeit weiter erhöhen. Natürlich könnten die Stufen 32 statt einer Erhebung 34 jeweils auch mehrere Erhebungen aufweisen. Unabhängig von der Form der Fussauflage zeigt die Fig.15 zudem, dass die Basis und die Fussauflage 31 einstückig ausgebildet sein können. Weiterhin weist die Basis zwei Gehäuseteile auf, deren Kontaktstelle mit dem Bezugszeichen 22 bezeichnet ist und die die Pedalachse zwischen sich aufnehmen. Die Gehäuseteile sind entlang der Pedalachse lösbar miteinander verbunden. Die Lager zur Drehung der Basis um die Pedalachse sind von den genannten Gehäuseteilen umschlossen und wegen der Trennbarkeit der Gehäuseteile gut zugänglich.

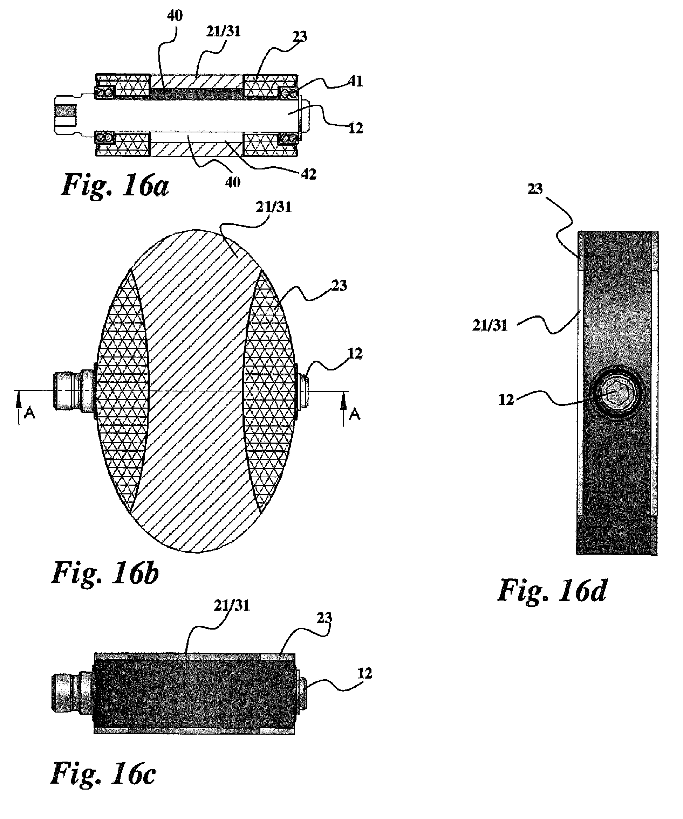

Die Fig.16a-c zeigen eine besondere Ausführungsform mit außenliegenden Lagern 41 die die Basis 21 und die Fussauflage 31 tragen. Das Lager 42 der Basis ist in einem Abstand 40 zur ersten Drehachse bzw. zur Pedalachse 12 angeordnet. Die Verbindung zwischen den Lagern 41 und der Basis 21 und/oder der Fussauflage 31 wird durch Dämpfungselemente oder Federelemente 23 (hier in Form von elastisch verformbaren Elementen) hergestellt, d.h. diese sind auf einer Seite mit einem Lager 41 und auf der anderen Seite mit der Basis 21 und/oder der Fussauflage 31 verbunden und halten die Basis 21 und/oder die Fussauflage 31 im Abstand von der Pedalachse 12.

Es gibt verschiedene Möglichkeiten, ein solches Pedal auszugestalten. Zum Beispiel kann die Basis 21 und/oder die Fussauflage 31 zusätzlich elastisch verformbare Elemente aufweisen oder selbst elastisch verformbar sein. Alternativ oder zusätzlich ist es auch möglich, die Dämpfungs- oder Federelemente 23 dazu auszubilden, dass sie nicht nur die Verschiebung der Basis 21 bzw. der Fussauflage 31 entlang der ersten Drehachse sondern auch eine Drehung der Fussauflage 31 und/oder der Basis 21 um die genannte zweite und/oder dritte Drehachse ermöglichen.

Abhängig von der Ausgestaltungsform erlauben elastisch verformbare Elemente, insbesondere elastomere Bauteile, durch die Kraft bzw. die kinematische Bewegungsausführung, die durch den Fuss des Nutzers auf die Fussauflagefläche ausgeübt wird, eine Drehbeweglichkeit der Fussauflage in der Transversalebene (insbesondere um die zweite Drehachse). Bevorzugt erlauben sie zudem eine allseitige Verwringbarkeit der Fussauflage relativ zur Basis und/oder zur Pedalachse (insbesondere eine Drehbarkeit um die zweite und/oder dritte Drehachse und allenfalls weitere Drehachsen). Zweckmässigerweise ermöglichen sie darüber hinaus auch eine Bewegung in vertikal orientierte Richtungen aus einer Transversalebene hinaus, insbesondere in etwa rechtwinklig zur Fussauflage des Pedals. Dadurch lassen sich besonders Rotationsbewegungen der Beingelenke und Verkippbewegungen des Fußes wie Supination bzw. Pronation bzw. noch komplexere Bewegungen des Fußes wie Eversion bzw. Inversion ausführen.

### Bezugszeichenliste:

- x1: virtuelle Drehachse im Fersenbereich
- x2: virtuelle Drehachse im Fersenbereich
- 11: Pedal
- 12: Pedalachse (physische Achse) bzw. übliche Pedalachse
- 12a: Äusserer Teil einer teleskopierbaren Pedalachse
- 12b: Innerer Teil einer teleskopierbaren Pedalachse
- 13: Erste Drehachse
- 14: Führungsschiene
- 15: Zweite Drehachse
- 17: Dritte Drehachse
- 21: Basis
- 22: Kontaktstelle der beiden Gehäuseteile der Basis
- 23: Federelement (Verschiebung; entlang Pedalachse)
- 23a: Äussere Schraubenfeder
- 23b: Innere Schraubenfeder
- 25: Federelement bzw. Gelenk (Drehung; zweite Drehachse)
- 27: Federelement bzw. Gelenk (Drehung; dritte Drehachse)
- 31: Fussauflage
- 32: Stufen
- 33: Sockel
- 34: Erhebungen / Profil
- 35: Gelenke / Achsenaufnahmen
- 37: Tretkurbelarm
- 39: Fuss
- 40: Abstand zwischen Basis und Pedalachse
- 41: Aussenliegende Lager
- 42: Lager der Basis

## Patentansprüche

1. Pedal mit einer ersten Drehachse (13), einer Basis (21) und einer Fussauflage (31) oder Handauflage, **dadurch gekennzeichnet, dass**
- die Basis (21) und die Fussauflage (31) oder Handauflage um die erste Drehachse (13) drehbar und entlang der ersten Drehachse (13) verschiebbar sind und
- es sich bei der Verschiebung um eine freie, geradlinige Bewegung handelt.

2. Pedal nach Anspruch 1, **dadurch gekennzeichnet, dass** die Verschiebung der Basis (21) entlang der ersten Drehachse (13) in eine oder beide Verschiebungsrichtungen gefedert und/oder gedämpft ist.

3. Pedal nach Anspruch 2, **dadurch gekennzeichnet, dass** die Federung und/oder Dämpfung in die eine Verschiebungsrichtung und die Federung und/oder Dämpfung in die andere Verschiebungsrichtung unterschiedlich stark sind.

4. Pedal nach einem der Ansprüche 1 bis 3, **dadurch gekennzeichnet, dass**
- die Fussauflage (31) oder Handauflage um eine zweite Drehachse (15) drehbar mit der Basis (21) oder mit der ersten Drehachse (13) verbunden ist, wobei
- die zweite Drehachse (15) quer zur ersten Drehachse (13) angeordnet ist und
- die zweite Drehachse (15) zusammen mit der Basis (21) entlang der ersten Drehachse (13) verschiebbar ist.

5. Pedal nach Anspruch 4, **dadurch gekennzeichnet, dass** die Konstruktion des Pedals (11) ein freies Zusammenspiel zwischen der Drehung der Basis (21) um die erste Drehachse (13), der Verschiebung der Basis (21) entlang der ersten Drehachse (13) und der Drehung der Fussauflage (31) oder Handauflage um die zweite Drehachse (15) erlaubt.

6. Pedal nach einem der Ansprüche 4 bis 5, **dadurch gekennzeichnet, dass**
- die zweite Drehachse (15) in Fahrtrichtung hinter oder vor der ersten Drehachse (13) angeordnet ist und sich die Fussauflage (31) oder Handauflage von der zweiten Drehachse (15) über die erste Drehachse (13) erstreckt oder
- die zweite Drehachse (15) über der ersten Drehachse (13) angeordnet ist oder von oben nach unten durch die Fussauflage (31) oder Handauflage verläuft und (15) die erste Drehachse (13) schneidet.

7. Pedal nach einem der Ansprüche 4 bis 6, **dadurch gekennzeichnet, dass** die Drehung der Fussauflage (31) oder Handauflage um die zweite Drehachse (15) in eine oder beide Drehrichtungen gefedert und/oder gedämpft ist.

8. Pedal nach einem der Ansprüche 4 bis 7, **dadurch gekennzeichnet, dass** die Fussauflage (31) oder Handauflage um eine dritte Drehachse (17) drehbar mit der Basis (21) oder mit der ersten Drehachse (13) verbunden ist, wobei die dritte Drehachse (17) quer zur ersten Drehachse (13) und quer zur zweiten Drehachse (15) angeordnet ist und wobei die Drehung um die dritte Drehachse (17) vorzugsweise in eine oder beide Drehrichtungen gefedert und/oder gedämpft ist.

9. Pedal nach einem der Ansprüche 2, 3, 7 oder 8, **dadurch gekennzeichnet, dass** die Federung und/oder Dämpfung durch elastisch verformbare Elemente (25) beispielweise aus Polymer, insbesondere Kautschuk, erreicht wird.

10. Pedal nach einem der Ansprüche 1 bis 9, **dadurch gekennzeichnet, dass** die Fussauflage eine Fussauftrittsfläche aufweist, welche konkav und/oder kaskadenförmig, von innen nach außen aufsteigend geformt ist.

11. Pedal nach einem der Ansprüche 1 bis 10, **dadurch gekennzeichnet dass** die Basis (21) einen Baukörper aus zwei Teilen aufweist, wobei die Teile entlang der ersten Drehachse (13) lösbar miteinander verbunden sind.

12. Pedal nach Anspruch 11, **dadurch gekennzeichnet, dass** die beiden Teile im Randbereich mittels eines oder einer Mehrzahl von Verbindungsgliedern, insbesondere durchgehender Verschraubungen oder Stifte, miteinander verbunden sind.

13. Pedal nach einem der Ansprüche 1 bis 12, **dadurch gekennzeichnet, dass** auf dem Verschiebungsweg der Basis (21) entlang der ersten Drehachse (13) ein oder mehrere den Verschiebungsweg verkürzende Abstandshalter oder Abstandsteller vorgesehen sind, welche vorzugsweise entlang der ersten Drehachse (13) verschiebbar sind, wobei bevorzugt auf einer oder beiden Seiten der Basis (21) solche Abstandshalter vorgesehen sind.

14. Pedal nach einem der Ansprüche 4 bis 8, **dadurch gekennzeichnet, dass** die Fussauflage (31) oder Handauflage über ein oder mehrere elastisch verformbare Elemente mit der Pedalachse (12) verbunden ist, wobei die elastisch verformbaren Elemente eine Drehung der Fussauflage (31) oder Handauflage relativ zur Pedalachse (12) um die zweite und/oder dritte Drehachse (15,17) erlauben, wobei durch die elastisch verformbaren Elemente vorzugsweise eine allseitige Verwringung der Fussauflage oder des Fusses ermöglicht ist.

15. Gerät mit einem Pedal nach einem der Ansprüche 1 bis 14, insbesondere Therapiegerät, Rehabilitationsgerät oder Sportgerät, welches vorzugsweise dazu ausgebildet ist, mittels der Füsse, der Beine, der Hände oder der Arme betrieben zu werden, wie beispielsweise ein Hand-Kurbelergometer.
